# EUROPEAN PATENT SPECIFICATION

(11) **EP 3 000 789 B1**
(45) Date of publication and mention of the grant of the patent: **04.11.2020**
(21) Application number: 15185228.2
(22) Date of filing: 15.09.2015
(51) Int. Cl.: C02F 1/469, C02F 1/44, C02F 103/08, C02F 5/00, C02F 1/42, C02F 1/461

(54) **APPARATUS AND METHOD FOR PURIFYING A FLUID**
VORRICHTUNG UND VERFAHREN ZUR REINIGUNG EINER FLÜSSIGKEIT
APPAREIL ET PROCÉDÉ DE PURIFICATION D'UN FLUIDE

(30) Priority: 15.09.2014 IT PD20140234
(43) Date of publication of application: 30.03.2016
(73) Proprietor: Idropan Dell'orto Depuratori S.r.l., 20159 Milano (IT)
(72) Inventor: SERVIDA, Tullio, I-20124 Milano (IT)
(74) Representative: Gallo, Luca

(56) References cited:
- WO-A1-2014/121316
- US-A1- 2012 031 763
- DERMENTZIS ET AL: "Continuous electrodeionization through electrostatic shielding", ELECTROCHIMICA ACTA, ELSEVIER SCIENCE PUBLISHERS, BARKING, GB, vol. 53, no. 6, 13 November 2007 (2007-11-13), pages 2953-2962, XP022411234, ISSN: 0013-4686, DOI: 10.1016/J.ELECTACTA.2007.11.006

## Description

### Field of application

The present invention regards an apparatus for purifying a fluid and a method for purifying a fluid by means of the aforesaid apparatus, according to the preamble of the respective independent claims.

More in detail, the apparatus and the method according to the invention are intended to be advantageously employed for removing ionized particles from a fluid, for the purpose of facilitating the recovery or removal of such particles. The latter can be typically constituted by ions of salts dissolved in a liquid or by metal ions, for example of industrial process fluids, or by polarizable organic substances.

The present apparatus can be intended for multiple applications, both in industrial and civil fields, such as the desalination of sea water, the softening of particularly hard waters, the removal of salts (such as chlorides and sulfates) from water, as well as the removal from any liquid of, for example, nitrates, nitrites, ammonia, heavy metals, organic substances (whether provided with an intrinsic electric charge or susceptible to polarization due to the electric field present that induces an electric dipole in the organic substance) or micropollutants in general, or for the deionization of fluids, for example of industrial processes or for the concentration of polluting substances that are difficult to dispose of or advantageous to recover for a reuse. The apparatus, object of the present invention, can also be incorporated in a machine, in particular for domestic use. In this case, it will allow purifying the water intended for such machine, allowing the latter to better achieve the functionalities for which it is used; such functions for example may include producing drinks, cleaning dishes, clothes etc.

The present invention is therefore generally inserted in the industrial field of the production of apparatuses for removing ionized particles from fluids.

### State of the art

Apparatuses are known for purifying fluids that exploit the principle of capacitive deionization for removing ionized particles from a fluid. Such apparatuses comprise at least one cell composed of an assembly of flow-through capacitors; the cell is more in detail formed by a plurality of superimposed electrodes, between which a flow of fluid to be purified is made to pass. The electrodes face each other and are charged with opposite polarities by a direct current power supply unit.

Operatively, such known apparatus provides for the alternation of operating steps, in which the ions present in the fluid are captured on the opposite electrodes, and regeneration steps, in which the ions accumulated on the electrodes are removed by means of a washing fluid.

The electrodes of the flow-through capacitors electrostatically absorb and release the ionic charge contaminants and actively participate in the process of deionization of the liquid to be treated.

The electrodes are also usually fed by collectors, for example made of graphite, and they are made of electrically conductive porous materials (e.g. typically made of carbon) in order to absorb high quantities of ionized particles on their surface.

Flow-through capacitors of the above-indicated known type are for example described in the patents US 6,413,409 and US 5,360,540.

The aforesaid operating and regeneration steps for the cells translate, with reference to the interaction between electrodes and ions, into the following operative steps:
- a step for absorbing the ions on the porous surface of the carbon of the electrodes supplied with opposite voltages; the energy expended for such step is proportional to the quantity of ions that are captured;
- a step of electrostatic liberation of the ions from the carbon of the electrodes, providing the latter with the previously absorbed quantity of charge, so as to neutralize the electrostatic attraction with the ions;
- a step for moving away the ions that are no longer electrostatically bound, to outside the porous electrodes, by means of charging the ions with reversed polarity, with the consequent possibility to remove them from the cell by means of the passage of the washing liquid.

The apparatuses with flow-through capacitors, present on the market and which exploit the principle of capacitive deionization according to the cyclically repeated operative steps mentioned above, have proven in practice that they have numerous drawbacks.

A first drawback lies in the fact that the apparatuses with flow-through capacitors have intermittent and hence discontinuous operation, which strongly negatively affects their productive efficiency/output. Such drawback is intrinsic in the operating principle itself of such apparatuses that leads the cell to purify the fluid for a time that varies between 50 and 75% of its operation, which stems from the need to subject the electrodes to the different above-indicated steps in order to operate in different times and modes on the ions (absorbing them, neutralizing them, moving them away).

In addition, the alternation of the operating and regeneration steps leads to queues of diluted fluid that cannot be exploited and which contributes to further negatively affecting the performances of the cell.

A second drawback lies in the fact that within the cell, high salinity concentrations can be reached with the consequent precipitation of salts, and hence the formation of fouling. A widespread problem in the cells with flow-through capacitors indeed pertains to the need to prevent the solutes from precipitating between the electrodes of the capacitor, obstructing the fluid passage channels and thus rendering the cell useless in the long term.

It must also be considered that the capacity of the electrodes to capture the ions in solution, and more generally the charged particles, is a characteristic that positively affects the operation of the capacitor. Nevertheless, the ions, after having been captured by the electrodes in the operating step, must be easily releasable into the flow of the washing liquid of the regeneration step.

For such purpose, numerous different embodiments of electrodes have been developed aimed to attempt to optimize the physical and electrical relation between the surface of the same electrodes and the ions to be treated upon varying the abovementioned operative steps (absorption, liberation, moving away). For example, electrodes have been designed made of spongy active carbon, molded in the form of sheets or fibers, as described for example in the patent US 6,413,409 or sheets of a mixture comprising PTFE as described for example in the patent US 6,413,409.

However, it is clear that not all the obtained electrodes can have optimal efficiency, since it is always necessary to balance the opposing needs of first retaining, then releasing the ions, making compromises in the process.

Apparatuses for purifying fluids are known which exploit the principle of electrodialysis for removing ionized particles from a fluid. Through dialysis, it is possible to obtain the separation of positive and negative ions dissolved as solutes inside a solution, by the traversing of selectively-permeable membranes of anionic and cationic type.

In order to accelerate the dialysis phenomenon, rather slow, a direct potential difference is normally established by means of the application of electrodes with opposite sign, such that the ions are stimulated to migrate towards the electrode with charge opposite their own. More in detail, the apparatuses for purifying a fluid by means of electrodialysis comprise a sequence of membranes alternately semi-permeable to cations and anions. Such membranes define parallel chambers; the aqueous solution to be purified is made to travel through these chambers. At the ends of the sequence of membranes, a potential difference is applied. Consequently, the ions migrate towards the electrode with opposite polarity, coming to form salt concentration chambers and salt dilution chambers. In other words, since the arrangement of the membranes is alternated with respect to their disposition to allow the ionic migration, the following come to be stabilized in the chambers: electrolyte trap compartments and purified solution (e.g. water) compartments.

The electrodialysis is thus based on the application of a direct electric field capable of forcing the ionic components to traverse the respective ion-selective and water-impermeable membranes.

A first drawback of the electrodialysis apparatuses lies in the fact that in order to prevent the staining of the semi-permeable membranes by the ions, it is necessary to use numerous expedients that can provide for filtering systems, the use of chemical agents, as well as temporary modifications in the operation of the electrodialysis apparatus, such as polarity reversal. All these expedients render the apparatus and its operation method complex and not very practical, such to require high, costly maintenance.

A second drawback of the electrodialysis apparatuses lies in the fact they are not adapted to treat fluids with low salinity, such to determine low conductivity in the fluid to be purified. Otherwise, it is known to arrange paints on electrodes that are capable of making positive or negative ions selectively pass.

Apparatuses for purifying fluids are known which exploit the principle of electrodeionization for removing ionized particles from a fluid. Such apparatuses described in the patents WO 00/44477, WO 2012/170192, JP 2003145164, WO 2005/011849, US 2012/031763 comprise at least one ion absorption cell traversed by a fluid to be treated containing ionized particles and provided with a containment structure that defines at least one first operating chamber through which the fluid to be treated flows and provided with a first wall having a first electrode associated provided with a first polarity, at least one second operating chamber through which the fluid to be treated containing ionized particles flows and provided with a second wall having a second electrode associated that is provided with a second polarity opposite the first, at least one first chamber for evacuating the ionized particles interposed between the first and the second operating chamber through which a washing fluid flows and provided with a third and a fourth wall opposite each other.

In addition, the third and the fourth wall delimit, alongside the first and the second wall, respectively the first and the second operating chamber. The third and the fourth wall each have at least one ion-selective area associated, susceptible to being traversed by ionized particles with corresponding polarity contained in the first and second operating chamber, which pass from the first and second operating chamber to the first evacuation chamber under the action of the electric field generated by the electrodes.

In accordance with the above-described prior apparatuses, the electric field always present in the first evacuation chamber between the third and the fourth wall acts on the ionized particles, pushing them to exit, in this manner reducing the efficiency of purification of the fluid to be treated.

With reference to the apparatus described in the patent US 2012/031763, it is specified that an intermediate electrode is provided at ground potential between two electrodes with opposite polarities. Such electrode does not decrease the electric field between the electrodes with opposite polarities and does not define any volume where the electric field maintains substantially constant potential value and where the fluid to be treated flows. Such apparatus has the same limits as the other apparatuses described above.

The scientific paper "Continuous electrodeionization through electrostatic shielding" by Konstantinos Delmentzis (ELECTROCHIMICA ACTA vol.53, n. 6) discloses a continuous electrodeionization cell with electrostatically shielded concentrate compartments or electrochemical Faraday cages formed by two flat short-circuited girds which are placed on the sides of cage delimiting between them the space wherein the fluid flows.

The patent application WO 2014/121316 discloses a process and a device for desalinating water by means of electrodialysis using semi-permeable membranes between two electrodes for building up an electric field, wherein, as membranes, electrically conducting, non-ion-selective, water- and ion-permeable membranes are used which, for potential equalization, are electrically connected pairwise, in order to generate a potential-free space between the two membranes of a pair.

The two above mentioned solutions of the known type are susceptible to be optimized in the efficiency of purifying the water.

### Presentation of the invention

In this situation, the problem underlying the present invention is therefore to eliminate the abovementioned problems of the prior art, by providing an apparatus for purifying a fluid and a method for purifying a fluid, in particular by means of the aforesaid apparatus, which are capable of removing high quantities of ionized particles with a high capture efficiency. Another object of the present invention is to provide an apparatus and a method for purifying a fluid, which are capable of removing the ionized particles with high energy efficiency. Another object of the present invention is to provide an apparatus and a method for purifying a fluid, which are capable of removing the ionized particles with high efficiency/output. Another object of the present invention is to provide an apparatus and a method for purifying a fluid, which are capable of purifying fluids contaminated by salts of different ionic species. Another object of the present invention is to provide an apparatus and a method for purifying a fluid, which require a low consumption of washing liquid.

Another object of the present invention is to provide an apparatus for purifying a fluid that is simple and inexpensive to obtain and entirely reliable in operation.

Another object of the present invention is to provide an apparatus for purifying a fluid, which allows being employed in a versatile manner in different applications, for industrial processes as well as in machines for home use, in plants in civil field for the purification of water and in plants for the desalination of sea water.

### Brief description of the drawings

The technical characteristics of the finding, according to the aforesaid objects, are clearly found in the contents of the below-indicated claims and the advantages thereof will be clearer from the following detailed description made with reference to the enclosed drawings, which represent several merely exemplifying and non-limiting embodiments of the invention, in which:
- figure 1 schematically shows the apparatus for purifying a fluid object of the present invention in its minimum structural components;
- figure 2 shows a general electrical and hydraulic operation scheme of the apparatus for purifying a fluid, object of the present invention;
- figures 3A and 3B schematically show, in two cross section views, a portion of the cell of the apparatus for purifying a fluid object of the present invention in two different operative moments in accordance with a first embodiment;
- figure 4 schematically shows, in a cross section view, a portion of the cell of the apparatus for purifying a fluid object of the present invention in accordance with one embodiment;
- figure 5 shows a first embodiment variant of the example of figure 4;
- figure 6 schematically shows, in perspective view, the apparatus for purifying a fluid in accordance with the embodiment of figure 5 in which the elementary layers or cells are repeated in succession;
- figures 7, 8, 9 and 10 show several embodiment variants of the example of figure 3A and 3B;
- figure 11 schematically shows, in cross section view, the apparatus for purifying a fluid in accordance with the embodiment of figure 3A and 3B in which the elementary layers or cells are repeated in succession;
- figure 12 schematically shows, in a perspective view, a portion of the cell of the apparatus for purifying a fluid of figure 11.

### Detailed description of a preferred embodiment

With reference to the set of drawings, reference number 1 indicates overall an embodiment of an apparatus for purifying a fluid, object of the present invention.

The apparatus 1, according to the invention, is adapted to be employed for removing ionized particles present in fluids, such particles susceptible of being affected by the presence of an electric field, such as ions in solution.

Hereinbelow, the term ionized particles will generically indicate any contaminant dissolved in a fluid F1 to be treated, capable of being attracted by an electrostatic field, such as in particular the ions dissolved in a fluid.

The ionized particles will therefore not only comprise dissolved ions such as salts, chlorides, sulfates, nitrates, nitrites, ammonia and heavy metals, but also organic substances or micropollutant substances in general whether provided with an intrinsic electric charge or susceptible of polarization due to the electric field present (as indicated hereinbelow) which induces an electric dipole in the substance itself.

The apparatus 1 is therefore adapted to operate for the deionization of industrial process fluids and for the deionization of water, in particular for softening the water of the water supply system and for the desalination of sea water; it is particularly capable of removing, from its interior, salts in solution (such as chlorides and sulfates), nitrates, nitrites, ammonia, and other polarized contaminants of organic substances or micropollutants in general.

The apparatus 1 is also adapted to concentrate ionized particles within fluids, particularly of industrial processes, in order to facilitate the recovery or the disposal of such particles.

In addition, the apparatus 1 is also adapted to be integrated in apparatuses or machines, for example for home use, in order to previously treat the water from the latter employed for their various use functions.

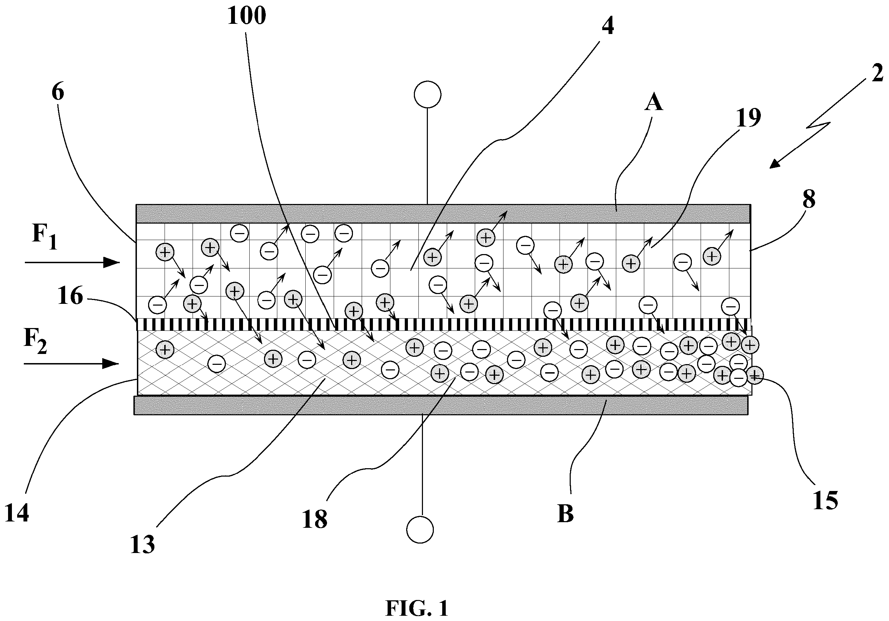

In accordance with the present invention and with the scheme of the general figure No. 1, the apparatus 1 comprises at least one ion absorption cell 2, which is traversed by a first operative fluid F1 (for example a fluid to be treated) containing charged particles e.g. cationic and/or anionic particles, such as water with high degree of mineralization, i.e. mineral salts dissolved therein, and in particular with high hardness or with high quantities of calcium and magnesium salts contained therein. As indicated above, the first operative fluid F1 can also be a solution of organic type containing mineral salts to be removed or an organic solution where it is necessary to carry out a separation between the components of the solution itself on the basis of the electric charge and/or molecular weight.

The apparatus can provide for multiple cells in series or parallel in a *per se* known manner in order to improve the purification of the fluid or treat high flow rates.

The aforesaid cell 1, illustrated in partial schematic form in the enclosed figures, is provided with a containment structure 3, e.g. made of plastic material, which at its interior contains at least one operating chamber 4 and at least one chamber 13 for evacuating the charged particles.

The operating chamber 4 is provided with an inlet opening 6 and an outlet opening 8, through which the aforesaid first operative fluid F1 is susceptible to flow while the evacuation chamber 13 is provided with a third inlet opening 14 and a third outlet opening 15, through which at least one second operative fluid F2 flows (e.g. a washing fluid if the permeate is to be considered a waste).

As specified hereinbelow, multiple operating chambers 4 and multiple evacuation chambers 13 can also be provided for each cell 1, or a plurality of elementary cells can be provided, each provided with one or more operating chambers and one or more evacuation chambers 13, as specified hereinbelow in the various illustrated examples.

According to the idea underlying the present invention, the operating chamber 4 and the evacuation chamber 13 are separated from each other by a non-ion-selective filtering membrane 100, which is advantageously electrically insulating.

With the expression "non-ion-selective filtering membranes" should be considered membranes suitable to separate components of fluids even with respect to dimensional or weight characteristics but substantially not on the basis of electrical characteristics, being with this expression excluded ion exchange membranes (ion-selective membranes).

The non-ion-selective filtering membrane can therefore advantageously be with reverse osmosis, nanofiltration, ultrafiltration, or microfiltration. The non-ion-selective filtering membrane will advantageously form, in a complete manner without requiring another support layer, the separation wall between the operating chamber 4 and the evacuation chamber 13 (indicated with 16 and 17).

The filtering membranes are usually classified based on their MWCO "molecular weight cut off" acronym, rather than on the size of the particles that they are capable of filtering.

The measurement unit MWCO of the filtering membranes is the Dalton that expresses the mass of the single atoms, molecules, ions, radicals and elementary particles. If MWCO is > 10,000 Dalton, this is ultrafiltration; if MWCO is < 500 Dalton this is reverse osmosis (RO).

The size of the "pores" of a membrane describes the characteristics of the membrane and the size of the particles that can be repelled. In the microfiltration membranes, the size of the pores various from 10 to 0.1 µm. The membrane with the largest pores is suitable for allowing the passage of a flow even in the presence of low pressures. In the ultrafiltration membranes, the size of the pores varies from 0.1 to 0.01 µm. In the nanofiltration membranes the size of the pores varies from 0.01 to 0.001 µm. In the reverse osmosis membranes the size of the pores varies from 0.001 to 0.0001 µm.

Inside the evacuation chamber 13, a three-dimensional porous electrical conductor 18 is housed, which is traversed inside his own volume by the second operative fluid F2 parallel along the plane of extension of the same three-dimensional porous electrical conductor. The latter also simultaneously forms a spacer for the walls of the evacuation chamber 13 as better detailed in the following.

The apparatus 1 further comprises a first and a second electrode A, B separated from each other with the operating chamber 4 and the evacuation chamber 13 interposed.

The two electrodes A, B are power supplied by an electrical power supply source 12 with opposite polarities in order to generate, respectively, an operative electric field in the operating chamber 4 and a limited electric field in the evacuation chamber 13.

The electric field in the evacuation chamber 13 has lower value than the operative electric field in the operating chamber 4, due to the shielding effect exerted by the three-dimensional porous electrical conductor 18.

Consequently, the charged particles contained in the operating chamber 4 are susceptible of traversing the non-ion-selective filtering membrane 100 under the action of the operative electric field generated by the electrodes A, B, and then be evacuated by the second operative fluid F2 once they have reached the evacuation chamber 13.

Indeed, the charged particles, once they have reached the evacuation chamber 13, remain substantially confined at its interior, since herein they are subjected to the small action of the limited electric field due to the presence of the three-dimensional porous electrical conductor 18, while they are subjected to the evacuation action by the second operative fluid F2, which flows through the volume of said conductor either continuously or intermittently.

The power supply source 12 will be adapted to supply the aforesaid electrodes with the aforesaid negative and positive voltages, with direct power supply or with pulsed power supply having average voltage value respectively positive and negative.

The electrical power supply source 12 will be susceptible of periodically reversing the polarities of the two electrodes A, B in order to force said cationic particles and the anionic particles contained in the operating chamber 4 to enter into a same evacuation chamber 13 by traversing the non-ion-selective filtering membrane 100.

Advantageously, the pressure in the first evacuation chamber 13 is therefore regulated with respect to the pressure in the contiguous operating chambers 4, 5 to a value susceptible of limiting the leakage of flows F1 or F2 through the non-ion-selective filtering membrane 100, preferably between 0 and 20%.

Preferably, in the operating chamber 4, an isolating porous spacer separator 19 is housed that is susceptible of being traversed by the first operative fluid F1. It is obtained, for example, by means of a granular material or by means of a net, which have definite size equal to the distance between the walls of the operating chamber 4.

The apparatus 1 according to the invention can comprise a plurality of operating chambers 4 and a plurality of evacuation chambers 13, distributed in succession with each other according for example to one of the configurations illustrated hereinbelow, with a plurality of pairs of first and second electrodes A, B electrically connected in series and with each pair at least one respective operating chamber 4 and one evacuation chamber 13 being interposed.

Therefore, between two electrodes A, B may be contained more evacuation chambers 13 and more operative chambers on which it will be distribute the voltage drop of the voltage applied to the electrodes.

Between the first wall 10 of the first operating chamber 4 and the third wall 16 of the first evacuation chamber 13, a first isolating porous spacer separator 19 is preferably interposed, susceptible of being traversed in its extension by the first operative fluid F1.

In accordance with an advantageous characteristic of the invention, the apparatus 1 comprises at least one ion exchange resin 36 contained inside the operating chamber 4 in order to interfere with the passage of the first operative fluid F1, and maintained herein by means of retention means 37.

In operation, the apparatus described up to now mainly from the structural standpoint operates as specified hereinbelow.

The positively and/or negatively charged particles contained in the first operative fluid F1 which flow in a continuous manner into the operating chamber 4 are forced by the action of the electric field produced by the two electrodes A, B to migrate respectively towards the cathode (negative electrode) and towards the anode (positive electrode). In such migration, the positive cationic particles and negative anionic particles contained in the fluid of the operating chamber 4 encounter the non-ion-selective filtering membrane 100 and are forced by the electric field to traverse it, passing through the meshes of the material constituting the membrane until they enter into the evacuation chamber 13. The charged particles with different polarity can traverse a same membrane 100 following the polarity reversal of the electrodes, or two separate membranes 100 in order to enter into two separate evacuation chambers if the evacuation chamber 13 is placed next to two operating chambers 4, or if two successive operating chambers 4 are provided which traverse electric fields with different polarity according to the descriptive examples illustrated hereinbelow.

Once they have entered the evacuation chamber 13, which is substantially filled with the electric porous conductor 18, the charged particles are subjected herein to a small action of the electric field and hence they are no longer able to cross the non-ion-selective filtering membrane 100, remaining confined in the substantially equipotential volume of the evacuation chamber 13, in order to then be conveyed towards the drain by the flow of the second operative fluid F2 which advances in the evacuation chamber 13 inside the volume of the porous electrical conductor 18.

Through the operative electric field present in the operating chamber 4, the charged particles present therein are moved into a volume constituted by the evacuation chamber 13, with limited electric field lower than that of the operative electric field, passing through a check barrier constituted by the non-ion-selective filtering membrane 100 which (at least partly) separates the operating chamber 4 from the evacuation chamber 13.

The three-dimensional porous electrical conductor 18 is for example obtained, in accordance with a possible abovementioned embodiment, by a metallic three-dimensional net.

The pores of the metallic three-dimensional net have to be considered obtained by the channels that are parallel to the sheet-like extension and are contained in the thickness of the net.

The net 18 may be also filled by a porous and conductive material.

The three-dimensional porous electrical conductor 18 causes the isopotentiality of the third chamber 13, like a Faraday cage, with shielding of the electric field in order to prevent conducting the charged particles to outside the same chamber 13 once they have entered inside.

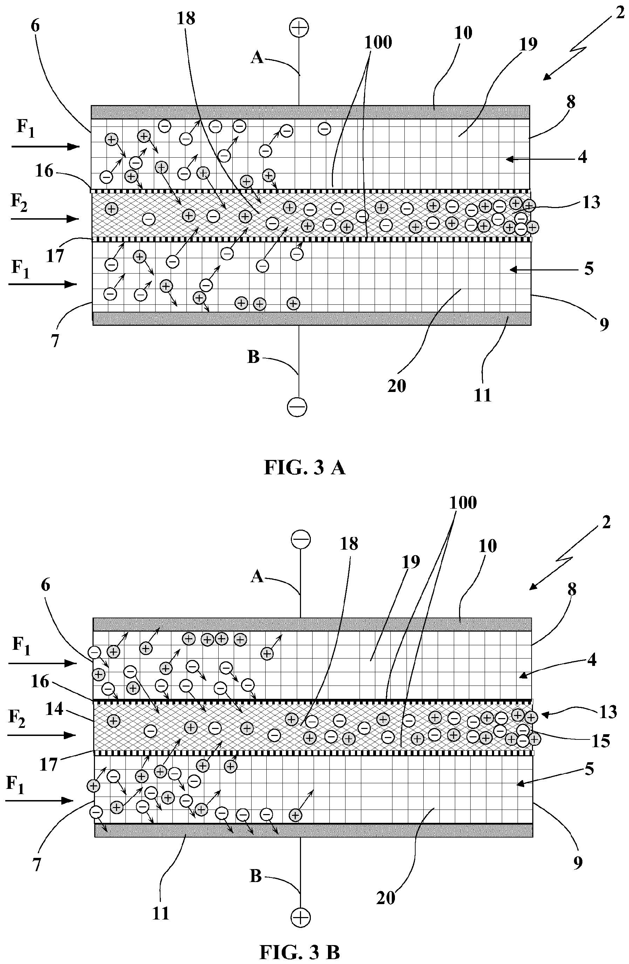

In accordance with the embodiment illustrated in the enclosed figures 3A, 3B, 7, 8, 9 and 10, at least one first and one second operating chamber are provided, respectively indicated with the reference numbers 4 and 5, respectively provided with a first and a second inlet opening, 6, 7 and with a first and second outlet opening 8, 9, through which the first operative fluid F1 is susceptible of flowing.

The aforesaid first and second operating chamber 4, 5 are respectively provided with a first and second wall 10, 11 for containing the first operative fluid, with which the first and second electrode A, B are correspondingly associated; such electrodes are power supplied by the electrical power supply source 12 to a first and a second polarity that are opposite each other. Advantageously, in accordance with a preferred but non-limiting embodiment of the present invention, the first and the second containment wall 10, 11 themselves achieve the two electrodes, given that they are constituted by a conductor material, such as graphite, in case coated with suitable materials capable of improving the performance. The electrodes, therefore, can be of the type with high surface area, of the type widely described in the literature for capacitive deionization. These electrodes with high porosity and surface area in fact allow an improved creation of the electric field, especially in the case of power supply with alternating polarity of the cell as described hereinbelow.

For such reason, the electrodes A, B coincide in the figures in accordance with this example with the same two containment walls 10, 11.

For some specific requirements, such as for example improving the ease of cleaning and/or sterilizing the cell, in some embodiments it may be advantageous to add, in front of the electrodes, a porous separation membrane similar to that indicated above and further considered hereinbelow.

According to the present invention in accordance with this embodiment, the first evacuation chamber 13 of the cationic particles and/or anionic particles absorbed from the two operating chambers 4, 5 is interposed between the first operating chamber 4 and the second operating chamber 5.

Advantageously, said evacuation chamber 13 can be provided with a third inlet opening 14 and a third outlet opening 15, through which the second operative fluid F2 flows. However, in accordance with a different embodiment of the present invention, as second operative flow F2, can differently be used the flow of fluid that seeps through the filtering membrane 100, as it will be considered in the following, for the purpose of using such seeping flow as a washing fluid.

The third chamber 13 is delimited by a third and fourth wall 16, 17, parallel to and opposite each other, which separately delimit, together with the first wall 10 and the second wall 11, respectively the first operating chamber 4 and the second operating chamber 5.

The third and the fourth wall 16, 17 each comprise the non-ion-selective filtering membrane 100, which as said can be with reverse osmosis, nanofiltration, ultrafiltration or microfiltration.

The electric field in the first evacuation chamber 13 is present in a much more limited manner due to the presence of the three-dimensional porous electrical conductor 18 inside the same first evacuation chamber 13. Such three-dimensional porous electrical conductor 18 is provided, in accordance with this embodiment and advantageously in accordance with all the embodiments of the present invention, with a thickness and hence with a corresponding volume susceptible of being traversed at its interior by the washing fluid F2, along the thickness of the conductor. This three-dimensional porous electrical conductor 18 is interposed between the third and the fourth wall 16, 17 and is in close contact with the same third and fourth wall 16, 17, thus reducing, inside the first evacuation chamber 13, the electric field generated by the first and second electrode 10, 11. Such three-dimensional porous electrical conductor causes a shielding effect of the electric field due to the volume subtended between the third and the fourth wall 16, 17 such that the charged particles contained in the first evacuation chamber 13 do not have the force to pass through the membranes.

The three-dimensional porous electrical conductor 18 extends its shielding substantially up to the internal surface of the third and fourth separation wall 16, 17, with the first operative fluid F1 that flows into the two operating chambers 4, 5 and which obviously has higher resistivity. The aforesaid three-dimensional porous electrical conductor 18 is advantageously formed by at least one three-dimensional porous structure (provided with thickness), in particular interposed as a spacer between the third and fourth wall 16, 17, and made of conductive material such as a metal, porous active carbon, possibly expanded graphite, carbon aerogel or other materials with similar characteristics. The three-dimensional structure of the material will allow the passage of the fluid at its interior (in the same lying plane thereof) and will thus attain the electrostatic shielding. The aforesaid three-dimensional porous electrical conductor 18 can also be advantageously formed by a net made of conductive material, e.g. made of metal, it too interposed as a spacer between the third and fourth wall 16, 17 and provided with a three-dimensional structure in order to allow the passage of the fluid in its same lying plane. Said three-dimensional porous electrical conductor may advantageously also be made from layers of a single material such as carbon; advantageously said layers realizing a different porosity between the lateral outer surfaces of the conductor and the center of the conductor where a greater porosity facilitates the sliding of the second operative washing fluid F2. Said layers are in this case mutually interpenetrating in order to maintain the unity of the three-dimensional structure with an intimate electrical contact.

Therefore, the above-described configuration of the cell 2 provides for making the second operative fluid F2 flow into the first evacuation chamber 13 interposed adjacent between the two operating chambers 4, 5 where the first fluid F1 (e.g. the fluid F1 being the fluid to be treated and the fluid F2 the washing fluid) moves; the first evacuation chamber 13 is separated from the two operating chambers 4, 5 by means of the filtering membranes of the third and fourth wall 16, 17 which are substantially not permeated by a flow of fluid F1 or F2 but which allow the selective crossing, under the action of the electric field generated by the electrodes A, B, of the ionized particles contained in the first operative fluid F1.

The filtering membranes that constitute the walls 16, 17 would allow a significant flow of liquid to cross them only in the presence of a pressure difference at their sides; at the same time, due to their porosity, they do not constitute an insulator capable of interrupting the electric field and the ion conduction.

The pressure in the first evacuation chamber 13 is therefore regulated with respect to the pressure in the contiguous operating chambers 4, 5 to a value susceptible of limiting the leakage of flows F1 or F2 preferably between 0 and 20%.

Such flow of leakage can form the second operating washing fluid F2 thus avoiding to realize the third inlet opening 14 for the evacuation chamber 13.

Therefore, as indicated above, preferably the pressure in the first evacuation chamber 13 will be regulated with value lower than that of the two operating chambers 4, 5 so as to prevent or limit a leakage of fluid F2 from such first evacuation chamber 13 to the two operating chambers 4, 5. Advantageously, in fact, the leakage if provided will be directed from the operating chambers 4,5 to the evacuation chamber 13.

Preferably, the non-ion-selective filtering membrane 100 will not exert a filtering action on a flow of fluid moving through the membrane due to a difference of pressures between the operating chambers 4, 5 and the evacuation chamber 13, since such flow will not be advantageously present; rather, it will only exert a filtering action on a flow of charged particles which are moved by the electric field.

The non-ion-selective filtering membrane 100 will also allow selecting the ionic particles that move into the evacuation chamber 13 as a function of its filtering characteristics (e.g. as a function of the size of the charged particles). Multiple evacuation chambers 13 can be provided in succession in different apparatuses 1 or in the same apparatus and delimited by filtering membranes 100 of different type in order to selectively separate ionic species of particles with different size or weight, or in any case particles that can be differently filtered by means of the different membrane types.

It will also be possible to insert, inside the same cell, more than one evacuation chamber 13.

Even if preferably the non-ion-selective filtering membrane 100 is not *per se*, due to its nature and material, impermeable to the fluid F1 or F2, it will in operation - due to the regulation of the pressure in the operating chambers 4, 5 and in the evacuation chamber 13 - substantially behave in an impermeable manner with respect to a fluid flow but in a permeable manner to the ionized particles capable of traversing the membrane.

The filtering membranes 100 that delimit the evacuation chamber 13, in accordance with the abovementioned embodiment illustrated in the enclosed figures 3A, 3B, 7, 8, 9 and 10, are therefore susceptible of being traversed by charged particles contained in the first and second operating chamber 4 and 5, which are acted upon by the action of the operative electric field generated by the electrodes A, B. At the same time, the filtering membranes 100 are adapted to confine, within the same first evacuation chamber 13, the cationic particles or the anionic particles or particles of both polarities, which crossed the non-ion-selective filtering membrane 100, maintaining them inside the same first evacuation chamber 13 due to the small movement force induced thereon by the electric field in such first evacuation chamber 13.

The filtering membranes 100 can face the electrodes for the entire extension thereof or they can be composed of side-by-side portions of membranes with different filtration characteristics in order to select ionized particles that can be differently filtered.

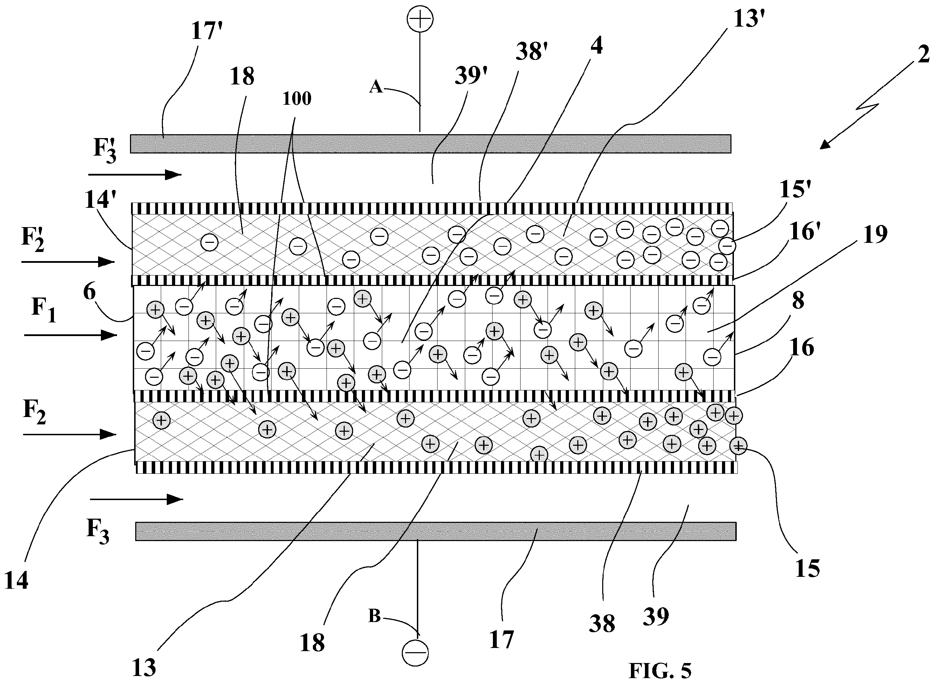

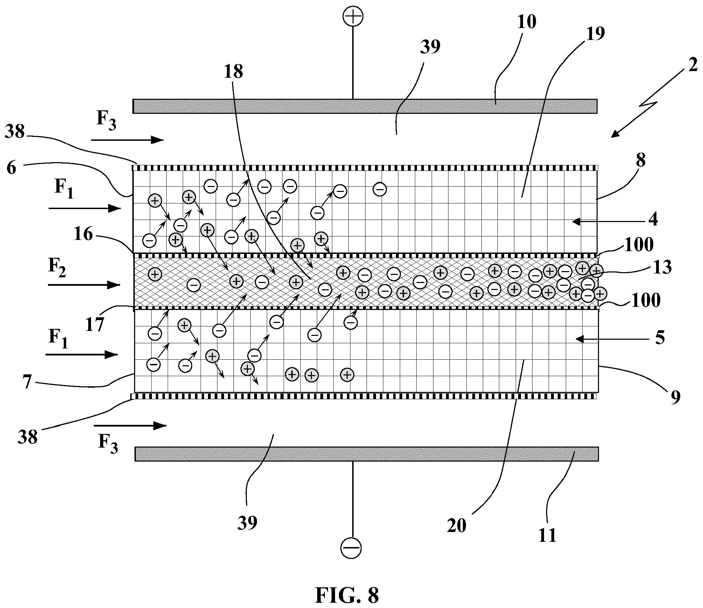

Advantageously, the aforesaid electrodes A, B (with reference to the specific example as illustrated in figure 8, with reference to a subsequent example illustrated in figure 5 and also with reference to the general principle of the present invention) can be protected by a cover layer 38, such as an analogous non-ion-selective filtering membrane with reverse osmosis, nanofiltration, ultrafiltration or microfiltration, for the purpose of protecting from dirtying due to the attraction of the ionized particles towards the electrodes A, B themselves. The porosity of the filtering membranes 100 is capable of preventing the electrical isolation of the electrodes A, B from the fluid.

Such cover layer 38 of the electrodes, if advantageously provided, can be made both in contact with the face of each electrode A, B, and spaced therefrom in order to define with each electrode a further secondary chamber 39 for the passage of a secondary fluid F3, as is schematized in figure 8 (and in figure 5 with reference to a further example described hereinbelow).

The secondary fluid F3 can also have the purpose of improving the conduction of the electrodes A, B with respect to the first operative fluid F1 and simultaneously maintaining clean the surfaces of the electrodes A, B themselves.

Between the first wall 10 of the first operating chamber 4 and the third wall 16 of the first evacuation chamber 13, a first isolating porous spacer separator 19 is preferably interposed, susceptible of being traversed in its extension by the first operative fluid F1.

Analogously, between the second wall 11 of the second operating chamber and the fourth wall 17 of the first evacuation chamber 13, a second isolating porous spacer separator 20 is preferably interposed, also susceptible of being traversed by the fluid F1 to be treated.

The abovementioned cell 2 is advantageously obtained by means of a plurality of superimposed purification layers, affected upstream and downstream by a common hydraulic circuit as detailed hereinafter, and each one comprising a first 4, a second 5 and a third chamber 13 as well as the electrodes.

More in detail, in such embodiment, the cell 2 is for such purpose provided with:
- a first supply section 21 obtained in its containment structure 3, and adapted to supply, with the first operative fluid F1, the first inlet opening 6 and the second inlet opening 7 respectively of the first and the second operating chamber 4, 5 of all the purification layers;
- a first extraction section 22 obtained in its containment structure 3, and adapted to receive the treated fluid F1 from the first outlet opening 8 and from the second outlet opening 9 of the first and of the second operating chamber 4, 5 of the aforesaid purification layers;
- a second supply section 23 obtained in the containment structure 3, which supplies, with the second operative fluid F2, the third inlet opening 14 of the first evacuation chamber 13 of the aforesaid purification layers;
- a second extraction section 24 obtained in the containment structure 3, which receives the washing fluid from the third outlet opening 15 of the first evacuation chamber 13 of the aforesaid purification layers.

The electrical connection between the first and the second electrodes A, B of each purification layer is made by means of terminals (not shown) which are connected to respective projections 25 externally projecting from the electrodes A, B themselves; preferably the projections 25 of the positive and negative electrodes A, B are extended from opposite sides or in any case sides of the respective electrodes A, B that are spaced from each other.

The two supply liquids of the cell, i.e. the first operative fluid F1 and the second operative fluid F2, can also be constituted by the same liquid (for example water to be treated and washing water), also by arranging a common supply.

The apparatus further comprises:
- a first solenoid valve or manual interception and/or regulation valve 28 in the supply duct 29 to the first inlet section 21;
- a second solenoid valve 30, or in its place a first manual adjustment tap, placed on the delivery duct 31 to the users and connected to the first extraction section 22;
- optionally third solenoid valve 32 on the supply duct 33 of the second operative fluid F2 connected to the second inlet section 23;
- a fourth solenoid valve 34 on the drain duct 35, connected to the second extraction section 24, or preferably in its place a second tap for adjustably varying the ratio between the first operative fluid F1 and the second operative fluid F2.

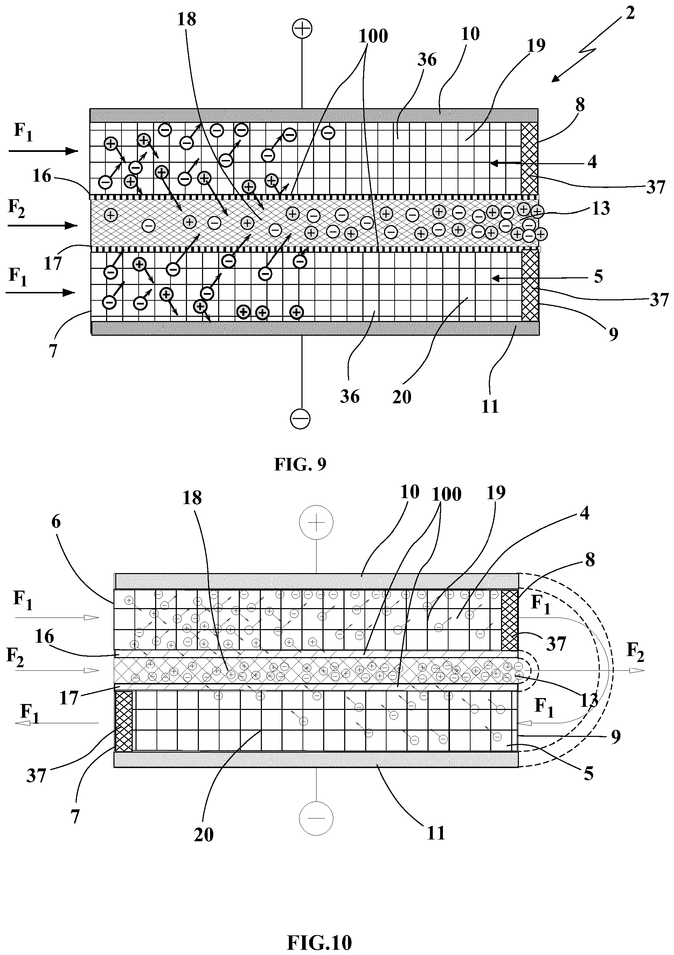

In accordance with a particular characteristic of the present invention illustrated in figures 9 and 10 in accordance with the first embodiment of the invention but also applicable to the other embodiments and to the general principle of the invention, ion exchange resins 36 are provided, contained inside at least one of the two operating chambers 4 and 5 in order to interfere with the passage of the first operative fluid F1. The resins are maintained inside the operating chamber without being evacuated from the first operative fluid F1 by means of retention means 37.

Preferably, but not necessarily, such ion exchange resins are of anionic and cationic type mixed together, both resin types preferably inserted in both the operating chambers 4, 5.

Preferably, the aforesaid retention means 37 are obtained with a porous separator, e.g. fixed to the operating chambers 4, 5 at the outlet opening 8, 9 thereof, susceptible of allowing the continuous passage of the first operative fluid F1 and simultaneously of retaining the resins 36, preventing the exit thereof together with the first operative fluid F1.

In operation, the resins allow slowing the advance of the cationic and anionic ions to the interior of the chambers together with the first operative fluid F1, increasing the possibility that they will be electrostatically attracted towards the evacuation chamber 13. More in detail the anionic and cationic resins 36 will be more greatly worn in proximity to the inlet openings 6, 7 of the operating chambers 4, 5, being able to retain a limited number of ions, while they will be more active towards the outlet openings 8, 9 where the ions are less numerous and where, therefore, due to their ion retention contribution, they allow the ions to have a greater possibility to cross the ion-selective areas and enter into the evacuation chamber 13.

In accordance with a preferred embodiment of the present invention, the electrical power supply source 12 is advantageously susceptible of periodically reversing the polarities of the first and second electrode 10, 11 in order to force the cationic particles and the anionic particles contained in the first and second operating chamber 4, 5 to enter into the third chamber 13 by traversing the corresponding non-ion-selective filtering membrane 100. Preferably, in accordance with the aforesaid embodiment, i.e. also with the others illustrated in the present description, the polarity reversal frequency varies in an interval comprised between 0.2 Hz and 10 KHz and preferably between 0.5 Hz and 100 Hz.

The above-mentioned frequency allows to avoid the formation of double layers ionization in correspondence of the electrodes; such double layers ionization being differently usually carried out for example in the traditional flow-through capacitors or in the electrodialysis apparatus or, more in general, in the purification equipment provided with electrodes supplied by an alternate voltage that reverse its polarity after a greater time than those corresponding to the above indicated frequencies.

The lower frequency is related to the time that the first operative fluid F1 requires to traverse the operating chamber 4, 5, so as to have at least one cycle of polarity reversal. A lower frequency of polarity reversal would not allow to remove both positive and negative charged particles.

Thanks to the aforesaid polarity reversal at the above considered frequencies, at the electrodes are present the ionic species of opposite polarity, and the pH of the fluid that flows on the electrodes is substantially not modified so that not excessively acidic or not excessively alkaline solutions are achieved and consequent problems of fouling are avoided.

Moreover advantageously the application of reversed voltage at the frequencies indicated above and the consequent absence of double ionization layer allows to obtain effectiveness in the filtering action even with voltage drops in the operating chambers (resulting from the potential applied to the electrodes) lower than the hydrolysis voltage, which with regard to the most common chemical species (usually salts) present in the water to be purified is about 1.8 volts (considering the overall overvoltage that it is usually necessary to supply to obtain hydrolysis effect and that is higher than the theoretical decomposition voltage).

The aforementioned frequency allows moreover to treat the fluid also in the operating chambers when are provided close adjacent to the electrodes and delimited by the electrodes. Without polarity reversal at the above mentioned frequencies said operating chambers adjacent to a single electrode could not be purified by ionic species of opposite polarity allowing the apparatus to achieve only low performance.

In accordance with this polarity reversal, the two operating chambers 4, 5 are traversed in parallel by the first operative fluid F1 since the anionic and cationic particles, due to the polarity reversal, can cross through the filtering membranes that delimit the first evacuation chamber 13, in order to then be removed from the second operative fluid F2 (hence with washing function) coming from either the first or the second operating chamber 4, 5.

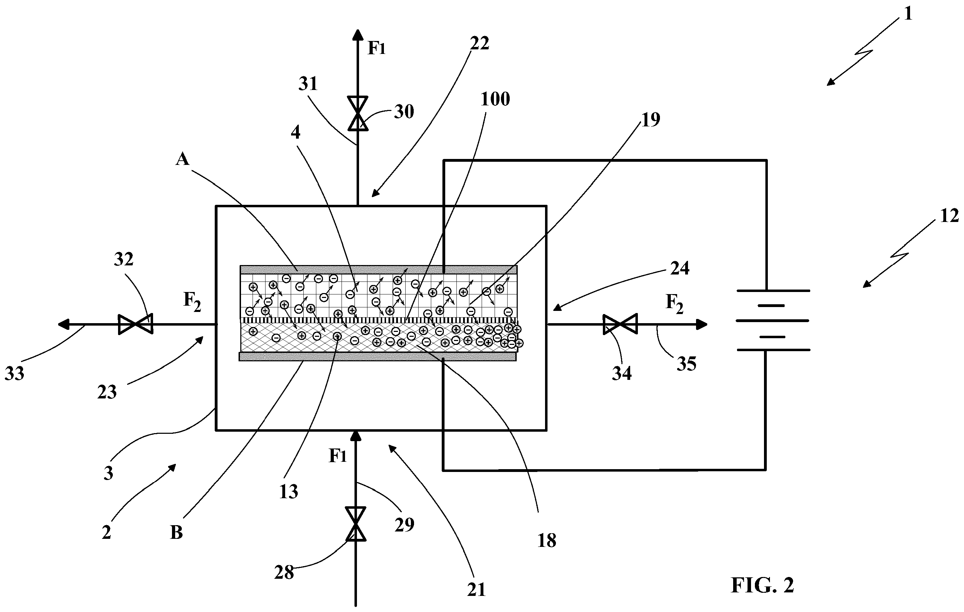

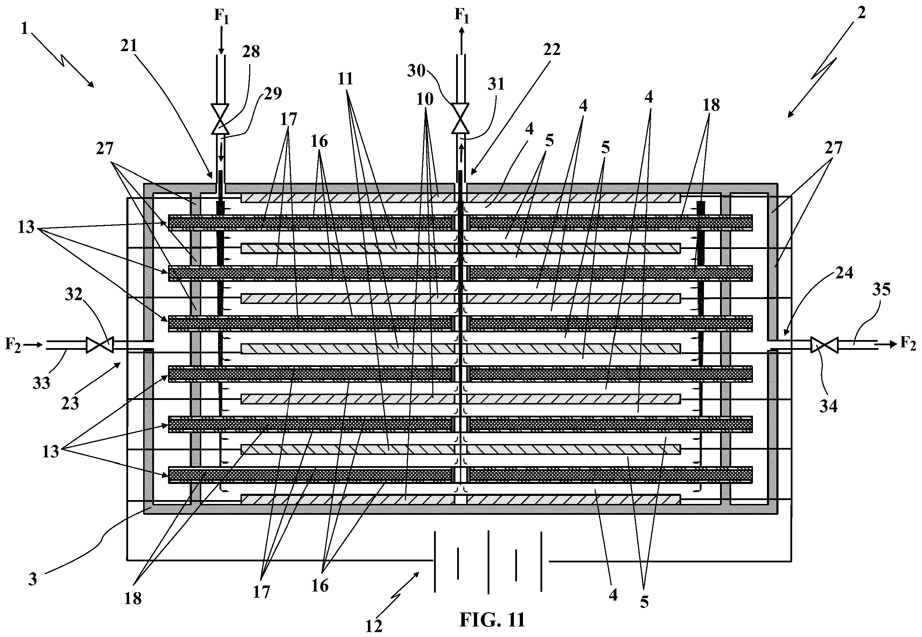

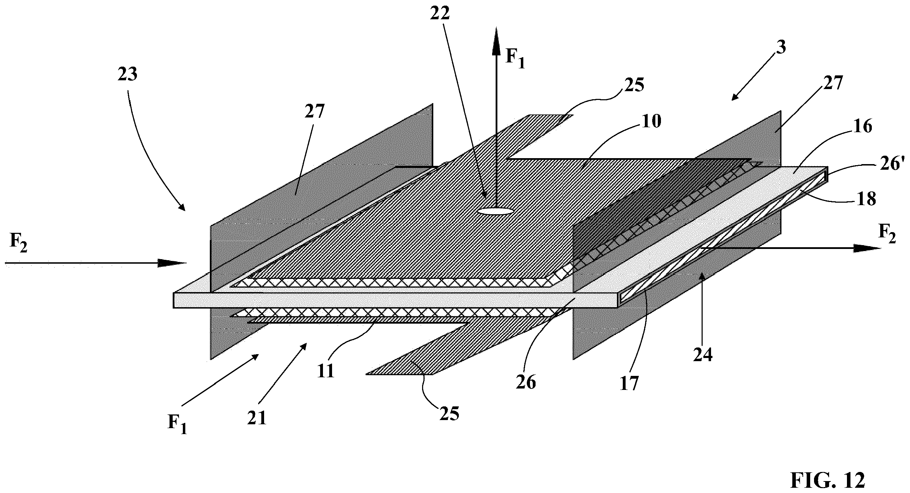

Of course, the single purification layer of the cell 2, shown in figure 12 in perspective view, can be repeated n times as illustrated in figure 2 in order to obtain a greater filtering action. In this case, preferably, as illustrated in the same figure 11, each intermediate electrode 10, 11 (excluding only the final electrodes) will act as a containment wall for two first operating chambers 4 or for two second operating chambers 5 of two adjacent and consecutive purification layers.

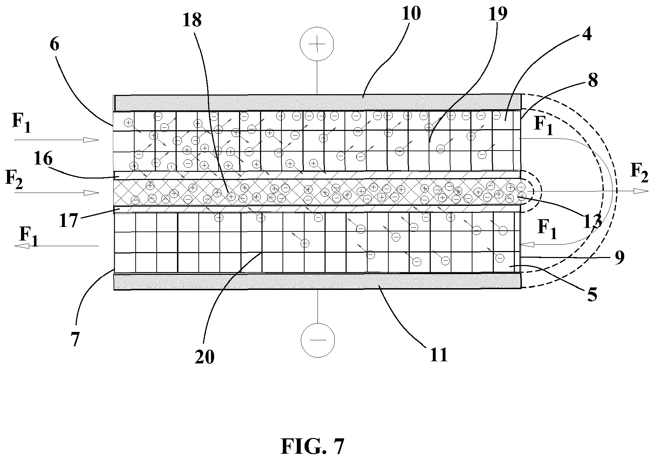

Preferably, moreover, the second extraction section 24 is extended substantially transversely to the purification layers, preferably in a central zone of the chambers 4, 5, 13, traversing the first 10, the second 11, the third 16 and the fourth wall 17 with corresponding through holes. In addition, in accordance with the embodiment characteristic illustrated in the detail of figure 7, but in general also referable as a variant of the present invention, the first evacuation chamber 13 is obtained in duct form and for such purpose is laterally closed with two lateral walls 26, 26' placed to join the third and fourth wall 16, 17 at two opposite edges thereof so as to create a duct for conveying the evacuation fluid. The latter is preferably extended with its ends beyond provided spacer separators 27, which delimit the extension of the first and second walls 4, 5 and separate the liquid to be treated F1, with which the first and the second chamber 4, 5 are supplied, from the washing liquid F2.

In accordance with a further embodiment of the present invention illustrated in the detail of figures 7 and 10, but also generally referable as a variant of the present invention, polarity reversal is not provided at the electrodes and the flow to be treated F1 sequentially traverses at least two operating chambers delimited by electrodes with opposite polarity in order to allow both the positive and negative ionic particles to traverse the filtering membranes under the action of the electric field. For such purpose, the two operating chambers are advantageously traversed in countercurrent and can be sequentially connected by connector sections made of electrically isolating material, indicated with the dashed line in figure 7 and 10 and of course arranged in positions of the cell that are susceptible to not interfere with the walls 16, 17 that delimit the first evacuation chamber 13.

In operation, the apparatus described up to now mainly from the structural standpoint operates as specified hereinbelow, with reference to the embodiment of figures 3A, 3B.

The positively and negatively charged particles contained in the liquid to be treated F1, which continuously flow into the first and second chamber 4, 5, are forced by the action of the electric field produced by the two electrodes A, B to respectively migrate towards the cathode (negative electrode) and towards the anode (positive electrode). In such migration, the positive cationic particles contained in the fluid of the operating chamber opposite that delimited by the cathode (first operating chamber 4 in accordance with figure 3A) and the negative anionic particles contained in the fluid of the operating chamber opposite that delimited by the anode (second operating chamber 5 in accordance with figure 3A) which encounter the filtering membranes of the third wall 16 and fourth wall 17 are forced by the electric field to traverse them by passing through the meshes of the material constituting the filtering membranes, until they enter into the first evacuation chamber 13.

Once they have entered into the first evacuation chamber 13, the charged particles are subjected here to a small action of the electric field, and thus they are no longer able to traverse the filtering membranes of the third 16 and fourth wall 17, remaining confined in the substantially equipotential volume of the third chamber 13, before then being conveyed towards the drain by the washing fluid flow F2 which continuously advances into the first evacuation chamber 13.

Through the electric field present in the first and in the second chamber 4, 5, the charged particles present herein are then moved into a volume constituted by the third evacuation chamber 13 with limited electric field, overcoming a check barrier constituted by the filtering membranes of the same walls 16, 17 of the third chamber 13.

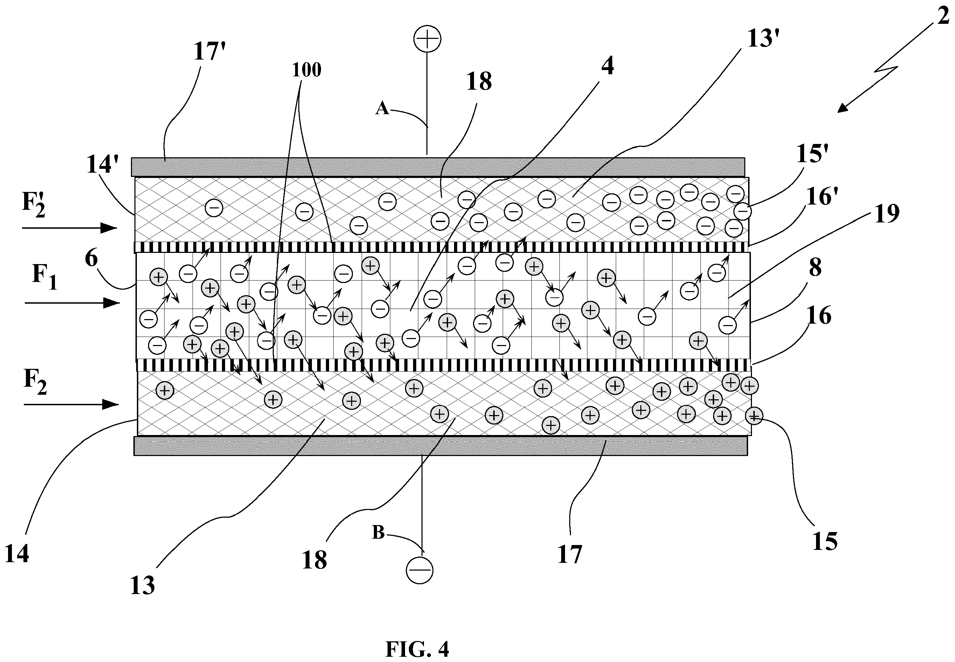

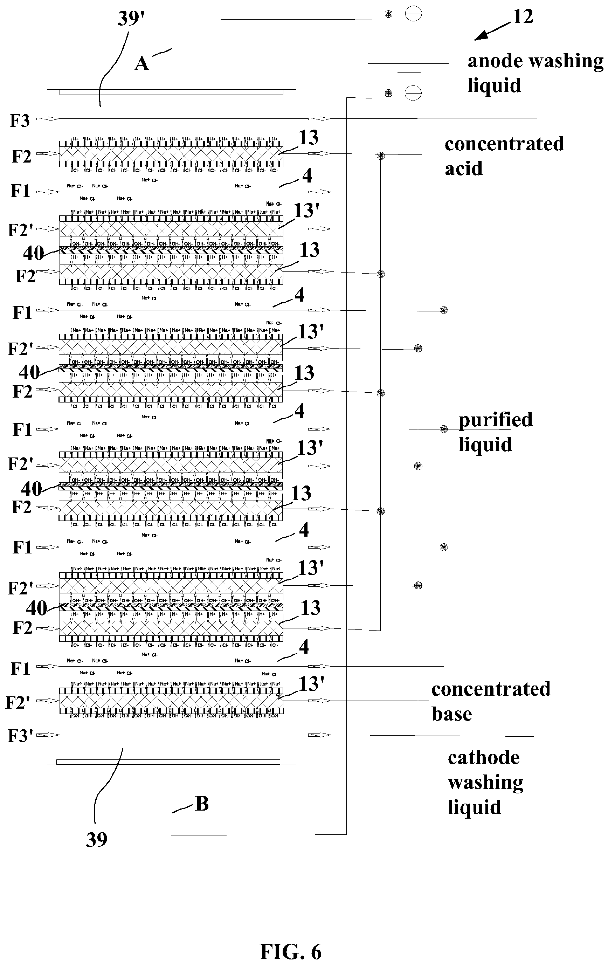

In accordance with a further embodiment of the invention illustrated in figures 4, 5 and 6, at least one first and one second evacuation chamber 13, 13' are provided (and advantageously a succession of such chambers are provided as illustrated in figure 6), each delimited by a third wall 16, 16' and a fourth wall 17, 17', each respectively provided with a third inlet opening 14 and 14', and with a third outlet opening 15, 15', through which the second operative fluid F2, F2' flows. The aforesaid third walls 16, 16', respectively of the first and the second evacuation chamber 13, 13', each comprises a non-ion-selective filtering membrane 100 and delimit between them the provided at least one operating chamber 4 (and advantageously a succession of such operating chambers 4 as illustrated in figure 6), which therefore remains interposed between the first and the second evacuation chamber 13, 13'.

The first electrode and the second electrode A, B are associated with the fourth walls 17, 17' respectively of the first and the second evacuation chamber 13, 13'.

With the term "associated" referred to an electrode and to a wall (in this example or more generally according to the invention), it must be intended that the electrode itself forms the wall or a direct mechanical connection, i.e. without the interposition of other chambers or layers, an indirect mechanical connection, with the interposition of other chambers or layers). In any case, the electric field generated by the electrode A, B will be particularly active with respect to such wall.

In accordance with this embodiment, the electrical power supply source 12 will preferably be susceptible of maintaining unchanged the polarity of the two electrodes A, B in order to force the cationic particles and the anionic particles contained in the operating chamber 4 to enter into respective two different evacuation chambers 13, 13' through respective filtering membranes 100.

In such a manner, as illustrated in figure 6, in the two evacuation chambers 13, 13' one can obtain the concentration for example of acids and bases at the outlet of the two corresponding second operative fluids F2 and F2', starting from an operative liquid F1 with a salt dissolved. In the example of figure 6, the case of sea water with sodium chloride dissolved is reported. In accordance with the embodiment variant illustrated in figure 5, the electrodes A, B are protected by a cover layer 38, 38', it too obtained by a non-ion-selective filtering membrane 100, advantageously spaced from the corresponding electrode A, B in order to define therewith a secondary chamber 39, 39' for the passage of at least one washing fluid of the electrode. In the case of the example of figure 6, two separate washing flows F3, F3' were provided respectively for the positive electrode A and for the negative electrode B.

As already seen for the general case and illustrated herein in figure 6 with reference to the above-described particular embodiment, the apparatus can comprise a plurality of operating chambers 4 and a plurality of evacuation chambers 13, 13', distributed in succession and with, in the case of this example, each operating chamber 4 interposed between two evacuation chambers. Pairs of first and second electrodes A, B electrically in series are provided; in this example, an operating chamber 4 and two evacuation chambers contiguous on opposite sides are interposed.

More clearly, therefore, in the embodiment exemplified in figures 4, 5 and 6, it can be observed that the cell is adapted such that it can separately recover the removed cationic and anionic particles.

In order to transfer relatively large quantities of charged particles, it is possible to connect in parallel to a certain number of base cells; in this manner, nevertheless, the overall operative current could reach high values. Since the cost of a power supplier increases with the increase of the operative current, to a greater extent than that which occurs with the increase in voltage, it is recommended to electrically connect the cells together in series. Also the electrodes represent a considerable cost in making the cells, since they require electrical connections to the power supply.

The intermediate electrodes A, B of the succession of pairs of electrodes A, B can be substituted or better yet obtained by means of a bipolar membrane 40.

In figure 6, a cell is described that provides for the connection in series and the use of bipolar membranes 40 instead of conventional electrodes.

It is known that the bipolar membranes are constituted by the joining of cation and anion exchange membranes by means of a rolling process. Creating an electric field with suitable potential difference, these membranes are capable of generating H+ and OH- ions, separating the water.

More in detail, in accordance with such embodiment illustrated in figure 6, it is possible to superimpose a plurality of operating chambers 4 and evacuation chambers 13, 13', preventing the insertion of the electrodes in each chamber group but exploiting the capacity of the bipolar membranes to separate water into Hydrogen and Hydroxyl ions and then close the electric circuit of the connection in series, while maintaining the superimposed chambers separated from the chemical standpoint. In this manner, one will obtain an electrically in series connection of the chambers while it becomes possible to select a hydraulic connection of the chambers both in parallel and at least partially in series.

For this purpose, in figure 4, one can observe the presence of only one operating chamber 4 for two chambers 13 and 13' respectively intended for the recovery of the particles with positive and negative charge.

The insertion is observed of two further chambers 39 and 39' intended for washing the electrodes in order to prevent possible gas bubbles (emitted in case the operating voltage is increased in order to increase the purification efficiency/output) from partially isolating the electrode or causing excessive internal pressures. Advantageously the two second operative flows F2 and F2' can be partially recirculated in order to increase the concentration of the recovered acids and bases.

The washing flows F3 and F3' can in turn be recirculated and possibly also crossed if advantageous.

The first operative flow F1 conveys the liquid to be purified, from which the ionized particles will be extracted.

By coupling these membranes to the evacuation chambers 13, as indicated in figure 6, one can create a basic unit composed of two evacuation chambers 13 and 13' and an operating chamber 4. The chambers 13, 13' are respectively delimited on the cationic side with a bipolar membrane in a chamber and on the anionic side with the subsequent bipolar membrane in the opposite chamber. Both chambers 13, 13' are facing a same operating chamber 4. The chambers 13 and 13' are opposite each other and each is separated from the upper 13' and lower 13 evacuation chamber of the series by a bipolar membrane that substitutes the two electrodes and the respective electrical connection in the connection in series. The bipolar membrane will have opposite insertion sense between the lower chamber and upper chamber. In the two evacuation chambers 13, 13', two second operative flows, respectively F2 and F2', will flow; these will convey the acidic and basic particles thus separated. This basic unit can be duplicated "n" times, thus rendering the apparatus more effective.

The bipolar membranes are capable of operating at rather high current densities, up to 30-50 ma/cm2. And at these current densities, they maintain a voltage at their ends that is on the order of 1-1.2V based on the density of operative current. The evacuation chambers 13, 13' however maintain at their ends a voltage that is close to zero (or in any case quite low). This fact makes the apparatus 1 according to the invention very efficient, if compared to the conventional electrodialysis cells which, due to the ion exchange membranes present, cannot reach comparable current densities or they sustain voltage drops due to the membranes that are certainly much bigger.

A typical cationic membrane often exceeds 10 ohm/cm2 and hence at a current density of 30 ma/cm2 generates a drop of 0.3V. Given that a cell of electrodialysis with bipolar membranes uses at least two membranes (one cationic and one anionic), there is clear energy savings obtainable with the described configuration, object of the present invention.

Another advantage of the present finding is to be able to easily operate on organic solutions where there are charged particles with often high molecular weight, which due to their nature cannot easily traverse a conventional ion exchange membrane.

Also forming an object of the present invention is a method for purifying a fluid, which in particular can advantageously but not exclusively employ the above-described apparatus 1; for the sake of simplicity, the same reference numbers and nomenclature of the apparatus 1 will be maintained hereinbelow.

The aforesaid method, according to the idea underlying the present invention, provides for the following operations.

The continuous flow is provided of the first operative fluid F1 containing cationic particles and anionic particles through at least one operating chamber 4 (or multiple operating chambers 4, 5 in accordance with the above-described examples) from the respective inlet opening to the respective outlet opening, as well as the flow of a second operative fluid through at least one evacuation chamber 13 (or multiple evacuation chambers 13, 13' in accordance with the above-described examples), from its third inlet opening 14 to its third outlet opening 15.

The evacuation chamber 13 at its interior comprises the three-dimensional porous electrical conductor 18, which is thus traversed by the second operative fluid F2, and is separated from the operating chamber 4 by the non-ion-selective filtering membrane 100.

The method provides for the generation of an electric field between the two electrodes A, B (or between a plurality of pairs of electrodes in accordance with the above-reported examples) between which at least one operating chamber and at least one evacuation chamber 13 are interposed.

For such purpose, electrodes A, B are direct voltage or average direct voltage power supplied with opposite polarities, in a manner such that the three-dimensional porous electrical conductor 18 is susceptible of reducing, inside the evacuation chamber 13, the electric field generated by the electrodes.

There is then a migration into the evacuation chamber 13, by traversing the non-ion-selective filtering membrane 100, of at least one part of the charged particles under the action of the operative electric field during the flow of the first operative fluid F1 into the operating chamber 4.

It is thus possible to obtain the evacuation, through the passage of the second operative fluid F2, of the charged particles migrated through the non-ion-selective filtering membrane 100 into the evacuation chamber 13 and subjected herein to the action of the limited electric field. The generation of the electric field can occur with periodic reversal of the polarity at the electrodes A, B in order to force the charged particles with opposite polarity to migrate through a same non-ion-selective filtering membrane 100 at different times, passing from the operating chamber 4 to the evacuation chamber 13.

More in detail, in accordance with the embodiment illustrated in the enclosed figures 3A, 3B, 7, 8, 9 and 10, the generation of an electric field is provided between the electrodes A, B associated with the first and second wall of the two operating chambers 4, 5 by means of direct voltage power supply or average direct voltage power supply of the same electrodes with opposite polarities.

There is thus the migration of at least part of the cationic particles and/or anionic particles contained in the two operating chambers 4, 5 under the action of the electric field, during the flow of the first operative fluid F1 into the aforesaid operating chambers 4, 5, with their movement from the first and from the second operating chamber 4, 5 to the first evacuation chamber 13, by traversing the filtering membranes under the action of the electric field generated by the electrodes A, B.

In accordance with the embodiment illustrated in the figures 3A, 3B, the flow of the first operative fluid F1 occurs in parallel into the two operating chambers 4, 5; otherwise, in accordance with the embodiment illustrated in figure 7, the flow of the first operative fluid F1 occurs sequentially into at least two operating chambers 4, 5 delimited by electrodes with opposite polarity. The traversing sequence provides for the passage of the fluid first through all or only a group of operating chambers at a first same polarity of the purification layers, and then subsequently the passage of the fluid through all or only a group of operating chambers at the second polarity of the purification layers.

There follows the treatment of the cationic particles and/or anionic particles which have migrated into the first evacuation chamber 13 passing through the filtering membranes provided with the third and fourth wall 16, 17, due to the barrier action exerted by the same filtering membranes contained in the first evacuation chamber 13 and subjected herein to the action of the limited electric field due to the shielding effect produced by the three-dimensional porous electrical conductor 18.

In the case of figures 3A and 3B, in which the generation of the electric field occurs with periodic reversal of the polarity at the electrodes A, B, there is a migration both of the cationic particles and of the anionic particles contained in the first and second operating chamber 4, 5 towards the first evacuation chamber 13 by traversing the filtering membranes both of the third and fourth wall 16, 17.

The apparatus and the method thus conceived therefore attain the pre-established objects.

In particular, by providing for a continuous operation of the fluid to be treated, the apparatus allows considerably increasing the efficiency with respect to apparatuses of known type operating in intermittent manner, such as the apparatuses with flow-through capacitors.

In addition, the apparatus according to the invention does not provide for forcing a fluid flow against the filtering membranes, as instead is provided for by the apparatuses that employ the principle of electrodialysis; consequently, the apparatus, object of the present invention, does not lead to any particular obstruction of the same filtering membranes, i.e. it does not require costly maintenance work. The same net of the three-dimensional porous electrical conductor 18 is adapted to prevent the obstruction of the walls 16, 17 that it spaces.

Advantageously, inside the evacuation chamber 13, both ionic species absorbed from the contiguous operating chambers 4, 5 are found, so that excessively acidic or alkaline solutions are not obtained, i.e. fouling problems are avoided. This is particularly in accordance with the first embodiment described above, since the presence of a variable electric field, which is reversed at the above mentioned frequencies, does not allow the development of considerable variations in the ionic balance of the first operative fluid.

The components employed by the apparatus, object of the present invention, allow obtaining cells at extremely limited costs.

Given that double layers of ionization are not provided for, as in the apparatuses with flow-through capacitors, it is not necessary to provide high current peaks with the power supply source, and consequently it is not necessary to employ costly electronics.

## Claims

1. Apparatus for purifying a fluid, **characterized in that** it comprises:
- at least one ion absorption cell (2) traversed by at least one first operative fluid (F1) containing charged particles, provided with a containment structure (3) defining at its interior:
- at least one operating chamber (4, 5) provided with an inlet opening (6, 7) and an outlet opening (8, 9), through which said at least one first operative fluid (F1) is susceptible to flow;
- at least one evacuation chamber (13, 13') for evacuating said charged particles, through which at least one second operative fluid (F2, F2') flows;
- said at least one operating chamber (4,5) and said at least one evacuation chamber (13, 13') being separated from each other by at least one non-ion-selective filtering membrane (100);
- a three-dimensional electrical conductor (18) housed in said at least one evacuation chamber (13, 13') having a substantially sheet-like extension with a thickness (S),
said three-dimensional electrical conductor (18) being porous or comprising at least one three-dimensional net made of conductive material,
said three-dimensional electrical conductor (18) being suitable to be traversed inside his own volume along said thickness parallel to said sheet-like extension by said at least one second operating fluid (F2, F2');
- an electrical power supply source (12);
- a first and a second electrode (A, B) separated from each other with said at least one operating chamber (4, 5) and said at least one evacuation chamber (13, 13') interposed, and suppliable with power by said electrical power supply source (12) with opposite polarities in order to generate an operative electric field in said at least one operating chamber (4, 5) and a limited electric field in said at least one evacuation chamber (13, 13'), with value lower than said operative electric field, due to the shielding effect of said three-dimensional electrical conductor (18);
- the charged particles contained in said operating chamber (4, 5) being susceptible of traversing said non-ion-selective filtering membrane (100) under the action of the operative electric field generated by said first and second electrode (A, B), of being evacuated by said at least one second operative fluid (F2, F2') in said at least one evacuation chamber (13, 13'), in which they are subjected to the action of said limited electric field;
- said electrical power supply source (12) periodically reversing the polarities of said first and second electrode (A, B), with a polarity reversal frequency comprised in an interval between 0.2 Hz and 10 KHz, in order to force said cationic particles and said anionic particles contained in said at least one operating chamber (4, 5) to enter into a same said at least one evacuation chamber (13, 13') through said at least one non-ion-selective filtering membrane (100).

2. Apparatus for purifying a fluid according to claim 1, **characterized in that** at least one of said operating chamber (4, 5) is adjacent to one of said first or second electrode (A, B) and is defined between the latter and one of said non-ion-selective filtering membrane (100) of said at least one evacuation chamber (13, 13 ').

3. Apparatus for purifying a fluid according to claim 2, **characterized in that** it comprises at least two of said operating chambers (4, 5), each being adjacent to one of said first or second electrode (A, B) and being defined between the latter and one of said non-ion-selective filtering membrane (100) of said at least one evacuation chamber (13, 13 ').

4. Apparatus for purifying a fluid according to claim 1, **characterized in that** it comprises at least one first and one second operating chamber (4, 5), respectively provided with: a first and a second inlet opening (6, 7); a first and a second outlet opening (8, 9), through which said at least one first operative fluid (F1) flows; and at least one first and second wall (10, 11) for containing said at least one first operative fluid (F1), respectively having associated said first and said second electrode (A, B); said at least one chamber (13, 13') for evacuating said cationic particles and/or anionic particles, being interposed between said first and second operating chamber (4, 5) and being provided with a third (16, 16') and a fourth wall (17, 17') each comprising said non-ion-selective filtering membrane (100); said third and fourth wall (16, 17) delimiting, together with said first wall (10) and with said second wall (11), respectively said first operating chamber (4) and said second operating chamber (5).

5. Apparatus for purifying a fluid according to claim 1, **characterized in that** it comprises at least one first and one second evacuation chamber (13, 13'), each delimited by a third wall (16, 16') and a fourth wall (17, 17'), respectively each provided with a third inlet opening (14, 14') and a third outlet opening (15, 15'), through which said at least one second operative fluid (F2, F2') flows; at least said third walls (16, 16') respectively of said first and said second evacuation chamber (13, 13') each comprising a non-ion-selective filtering membrane (100) and between them delimiting said at least one operating chamber (4) interposed between said first and second evacuation chamber (13, 13');
- said first electrode and said second electrode (A, B) being associated with the fourth walls (17, 17') respectively of said first and said second evacuation chamber (13, 13').

6. Apparatus for purifying a fluid according to any one of the preceding claims, **characterized in that** said filtering membranes (100) are selected from among microfiltration membranes, ultrafiltration membranes, nanofiltration membranes and reverse osmosis membranes.

7. Apparatus for purifying a fluid according to claim 1, **characterized in that** said electrodes (A, B) are protected by a cover layer (38, 38'), in particular obtained from a non-ion-selective filtering membrane (100).

8. Apparatus for purifying a fluid according to claim 7, **characterized in that** each said cover layer (38, 38') is spaced from the corresponding said electrode (A, B) in order to define therewith a secondary chamber (39, 39') for the passage of at least one washing fluid (F3, F3').

9. Apparatus for purifying a fluid according to claim 1, **characterized in that** it comprises a plurality of operating chambers (4, 5) and a plurality of evacuation chambers (13, 13'), distributed in succession with each other according to one or more of the preceding claims, with pairs of said first and second electrodes (A, B) with, interposed, said at least one operating chamber (4, 5) and said at least one evacuation chamber (13, 13') electrically in series.

10. Apparatus for purifying a fluid according to claim 9, **characterized in that** at least two intermediate electrodes (A, B) of said succession of pairs of electrodes (A, B) are substituted by at least one bipolar membrane (40).

11. Apparatus for purifying a fluid according to any one of the preceding claims, **characterized in that** in said at least one operating chamber (4, 5), at least one isolating porous spacer separator (19) is housed, susceptible of being traversed by said first operative fluid (F1), in particular constituted by granular material of definite size equal to the distance between the walls of each operating chamber.

12. Apparatus for purifying a fluid according to any one of the preceding claims, **characterized in that** it comprises at least one ion exchange resin (36) contained inside said at least one operating chamber (4, 5) in order to interfere with the passage of said first operative fluid (F1), and maintained herein by means of retention means (37).

13. Method for purifying a fluid by means of an apparatus according to clam 1, **characterized in that** it comprises:
- the continuous flowing of a first operative fluid (F1) containing charged particles through at least one operating chamber (4, 5) from an inlet opening (6, 7) to an outlet opening (8, 9);
- the continuous or intermittent flowing of a second operative fluid (F2, F2') through at least one evacuation chamber (13, 13') for evacuating said charged particles; said at least one evacuation chamber (13, 13') comprising inside a three-dimensional electrical conductor (18), having a substantially sheet-like extension with a thickness (S), said three-dimensional electrical conductor (18) being porous or comprising at least one three-dimensional net made of conductive material, said three-dimensional electrical conductor (18) being traversed inside his own volume along said thickness parallel to said sheet-like extension by said at least one second operating fluid (F2, F2 '); said at least one evacuation chamber (13, 13') being separated form said at least one operating chamber (4, 5) by at least one wall (16, 16', 17, 17') comprising a non-ion-selective filtering membrane (100);
- generation of an operative electric field between at least two electrodes (A, B), between which said at least one operating chamber (4, 5) and said at least one evacuation chamber (13, 13') are interposed, by direct or average direct voltage power supplying said electrodes (A, B) with opposite polarities, in order to generate an operative electric field in said at least one operating chamber (4, 5) and a limited electric field in said at least one evacuation chamber (13, 13'), with value lower than said operative electric field, due to the shielding effect of said three-dimensional electrical conductor (18); said the three-dimensional electrical conductor (18) being susceptible of reducing, inside said at least one evacuation chamber (13, 13'), the electric field generated by said electrodes (A, B);
- migration of at least one part of said charged particles under the action of said operative electric field during the flow of said first operative fluid (F1) into said at least one operating chamber (4, 5) into the evacuation chamber (13), by traversing said non-ion-selective filtering membrane (100);
- evacuation through said second operative fluid (F2, F2') of said charged particles migrated through said non-ion-selective filtering membrane (100) into the evacuation chamber (13) and subjected herein to the action of the limited electric field;
- the generation of said electric field occurring with periodic reversal of the polarity at the electrodes (A, B) with a polarity reversal frequency comprised in an interval between 0.2 Hz and 10 KHz, in order to force the charged particles with opposite polarity to migrate through said non-ion-selective filtering membrane (100) passing from said at least one operating chamber (4, 5) to said at least one evacuation chamber (13, 13').

14. Method according to claim 13, by means an apparatus according to clam 1, **characterized in that** the pressure in said at least one first evacuation chamber (13, 13') is adjusted with respect to the pressure in said at least one operating chamber (4, 5) to a value susceptible of limiting the leakage of operative flows (F1, F2) through said non-ion-selective filtering membrane (100) preferably between 0 and 20%.

## Patentansprüche

1. Vorrichtung zur Reinigung einer Flüssigkeit, **dadurch gekennzeichnet, dass** sie Folgendes umfasst:
- mindestens ein Ionenabsoprtionszelle (2), die von mindestens einer geladene Partikel enthaltenden ersten Aufbereitungsflüssigkeit (F1) überquert wird und mit einer Gehäusestruktur (3) ausgestattet ist, die in ihrem Inneren Folgendes definiert:
- mindestens eine Aufbereitungskammer (4, 5), die mit einer Zulauföffnung (6, 7) und einer Ablauföffnung (8, 9) ausgestattet ist, über die die genannte mindestens eine erste Aufbereitungsflüssigkeit (F1) zu fließen geeignet ist;
- mindestens eine Abführungskammer (13, 13') zum Abführen der genannten geladenen Partikel, über die mindestens eine zweite Aufbereitungsflüssigkeit (F2, F2') fließt;
- wobei die mindestens eine Aufbereitungskammer (4, 5) und die genannte mindestens eine Abführungskammer (13, 13') voneinander durch mindestens eine nicht-ionenselektive Filtermembran (100) getrennt sind;
- einen dreidimensionalen elektrischen Leiter (18), der in der genannten mindestens einen Abführungskammer (13, 13') untergebracht ist und im Wesentlichen einen plattenähnlichen Verlauf mit einer Stärke (S) aufweist, wobei der genannte dreidimensionale elektrische Leiter (18) geeignet ist, in seinem Volumen entlang der genannten Stärke parallel zu dem genannten plattenähnlichen Verlauf von mindestens einer zweiten Aufbereitungsflüssigkeit (F2, F2') überquert zu werden;
- eine elektrische Stromversorgungsquelle (12);
- eine erste und eine zweite Elektrode (A, B), die voneinander durch die genannte mindestens eine Aufbereitungskammer (4, 5) und die genannte mindestens eine Abführungskammer (13, 13') getrennt sind, die sich dazwischen befinden und von der genannten elektrischen Stromversorgungsquelle (12) mit Strom entgegengesetzter Polaritäten versorgt werden können, um ein operatives elektrisches Feld in der genannten mindestens einen Aufbereitungskammer (4, 5) und ein begrenztes elektrisches Feld in der genannten mindestens einen Abführungskammer (13, 13') zu erzeugen, dessen Wert durch die Abschirmwirkung des genannten dreidimensionalen elektrischen Leiters (18) unter dem des genannten operativen elektrischen Felds liegt;
- wobei die in der genannten Aufbereitungskammer (4, 5) enthaltenen Partikel geeignet sind, die genannte nicht-ionenselektive Filtermembran (100) unter der Einwirkung des von der genannten ersten und zweiten Elektrode (A, B) erzeugten operativen elektrischen Felds zu überqueren, von der genannten mindestens einen Aufbereitungsflüssigkeit (F2, F2') in die genannte mindestens eine Abführungskammer (13, 13') abgeführt zu werden, in der sie der Wirkung des genannten begrenzten elektrischen Felds ausgesetzt werden;
- wobei die elektrische Stromversorgungsquelle (12) in regelmäßigen Abständen die Polaritäten der genannten ersten und zweiten Elektrode (A, B) bei einer Polaritätsumkehrungsfrequenz zwischen 0,2 Hz und 10 kHz umkehrt, um die in der genannten mindestens einen Aufbereitungskammer (4, 5) enthaltenen genannten kationischen Partikel und genannten anionischen Artikel dazu zu zwingen, über eine nicht-ionenselektive Filtermembran (100) in eine gleiche genannte mindestens eine Abführungskammer (13, 13') einzutreten.

2. Vorrichtung zur Reinigung einer Flüssigkeit nach Anspruch 1, **dadurch gekennzeichnet, dass** mindestens eine der genannten Aufbereitungskammern (4, 5) an eine der genannten ersten oder zweiten Elektroden (A, B) angrenzt und zwischen Letzterer und einer genannten nicht-ionenselektiven Filtermembran (100) der genannten mindestens einen Abführungskammer (13, 13') definiert ist.

3. Vorrichtung zur Reinigung einer Flüssigkeit nach Anspruch 2, **dadurch gekennzeichnet, dass** sie mindestens zwei der genannten Aufbereitungskammern (4, 5) umfasst, von denen jede an eine der genannten ersten oder zweiten Elektroden (A, B) angrenzt und zwischen Letzterer und einer genannten nicht-ionenselektiven Filtermembran (100) der genannten mindestens einen Abführungskammer (13, 13') definiert ist.

4. Vorrichtung zur Reinigung einer Flüssigkeit nach Anspruch 1, **dadurch gekennzeichnet, dass** sie mindestens eine erste und eine zweite Aufbereitungskammer (4, 5) umfasst, die jeweils mit Folgendem ausgestattet ist: einer ersten und einer zweiten Zulauföffnung (6, 7); einer ersten und einer zweiten Ablauföffnung (8, 9), durch die die genannte mindestens eine erste Aufbereitungsflüssigkeit (F1) fließt; und mindestens eine erste und zweite Wand (10, 11) zum Enthalten der genannten mindestens einen ersten Aufbereitungsflüssigkeit (F1), mit denen jeweils eine genannte erste und genannte zweite Elektrode (A, B) verbunden ist; wobei die genannte mindestens eine Kammer (13, 13') zum Abführen der genannten kationischen Partikel und/oder anionischen Partikel zwischen der genannten ersten und zweiten Aufbereitungskammer (4, 5) eingefügt und mit einer dritten (16, 16') und einer vierten Wand (17, 17') ausgestattet ist, von denen jede eine nicht-ionenselektive Filtermembran (100) umfasst; wobei die genannte dritte und vierte Wand (16, 17) zusammen mit der genannten ersten Wand (10) und mit der genannten zweiten Wand (11) jeweils die genannte erste Aufbereitungskammer (4) und die genannte zweite Aufbereitungskammer (5) definieren.

5. Vorrichtung zur Reinigung einer Flüssigkeit nach Anspruch 1, **dadurch gekennzeichnet, dass** sie mindestens eine erste und eine zweite Abführungskammer (13, 13') umfasst, von denen jede von einer dritten Wand (16, 16') und einer vierten Wand (17, 17') begrenzt wird, die jeweils mit einer dritten Zulauföffnung (14, 14') und einer dritten Ablauföffnung (15, 15') ausgestattet sind, über die die genannte mindestens eine zweite Aufbereitungsflüssigkeit (F2, F2') fließt, mindestens genannte dritte Wände (16, 16') jeweils der genannten ersten und genannten zweiten Abführungskammer (13, 13'), von denen jede eine nicht-ionenselektive Filtermembran (100) umfasst, die zwischen sich die genannte zwischen der genannten ersten und zweiten Abführungskammer (13, 13') eingesetzte mindestens eine Aufbereitungskammer (4) begrenzen;
- wobei die genannte erste Elektrode und die genannte zweite Elektrode (A, B) mit den vierten Wänden (17, 17') jeweils der genannten ersten und der genannten zweiten Abführungskammer (13, 13') verbunden sind.

6. Vorrichtung zur Reinigung einer Flüssigkeit nach einem beliebigen der vorangegangenen Ansprüche, **dadurch gekennzeichnet, dass** die genannten Filtermembranen (100) unter Mikrofiltrationsmembranen, Ultrafiltrationsmembranen, Nanofiltrationsmembranen und Umkehrosmosemembranen gewählt werden.

7. Vorrichtung zur Reinigung einer Flüssigkeit nach Anspruch 1, **dadurch gekennzeichnet, dass** die genannten Elektroden (A, B) durch eine Deckschicht (38, 38") geschützt sind, die insbesondere aus einer nicht-ionselektiven Filtermembran (100) erzielt wird.

8. Vorrichtung zur Reinigung einer Flüssigkeit nach Anspruch 7, **dadurch gekennzeichnet, dass** jede genannte Deckschicht (38, 38') sich von der entsprechenden genannten Elektrode (A, B) im Abstand befindet, um damit eine Nebenkammer (39, 39') für den Durchgang mindestens einer Waschflüssigkeit (F3, F3') zu definieren.

9. Vorrichtung zur Reinigung einer Flüssigkeit nach Anspruch 1, **dadurch gekennzeichnet, dass** sie eine Vielzahl von Aufbereitungskammern (4, 5) und eine Vielzahl von Abführungskammern (13, 13'), die nach einem oder mehreren der vorangegangenen Ansprüche der Reihe nach verteilt sind, mit Paaren der genannten ersten und zweiten Elektroden (A, B) umfasst, wobei die genannte mindestens eine Aufbereitungskammer (4, 5) und die genannte mindestens eine Abführungskammer (13, 13') elektrisch in Reihe dazwischengeschaltet sind.

10. Vorrichtung zur Reinigung einer Flüssigkeit nach Anspruch 9, **dadurch gekennzeichnet, dass** mindestens zwei Zwischenelektroden (A, B) der genannten Folge von Elektrodenpaaren (A, B) durch mindestens eine bipolare Membran (40) ersetzt werden.

11. Vorrichtung zur Reinigung einer Flüssigkeit nach einem der vorangegangenen Ansprüche, **dadurch gekennzeichnet, dass** in der genannten mindestens einen Aufbereitungskammer (4, 5) mindestens ein poröser isolierender Trennabscheider (19) untergebracht ist, der geeignet ist, von der genannten ersten Aufbereitungsflüssigkeit (F1) überquert zu werden und insbesondere aus Granulat einer bestimmten Größe besteht, die dem Abstand zwischen den Wänden jeder Aufbereitungskammer entspricht.

12. Vorrichtung zur Reinigung einer Flüssigkeit nach einem beliebigen der vorangegangenen Ansprüche, **dadurch gekennzeichnet, dass** sie mindestens ein in der genannten mindestens einen Aufbereitungskammer (4, 5) enthaltenes Ionenaustauschharz (36) umfasst, um den Durchgang der genannten ersten Aufbereitungsflüssigkeit (F1) zu behindern und dort durch Rückhaltevorrichtungen (37) enthalten bleibt.

13. Verfahren zur Reinigung einer Flüssigkeit mittels einer Vorrichtung nach Anspruch 1, **dadurch gekennzeichnet, dass** sie Folgendes umfasst:
- den kontinuierlichen Strom einer ersten Aufbereitungsflüssigkeit (F1), die geladene Partikel enthält, durch mindestens eine Aufbereitungskammer (4, 5) von einer Zulauföffnung (6, 7) zu einer Ablauföffnung (8, 9);
- den kontinuierlichen oder intermittierenden Strom einer zweiten Aufbereitungsflüssigkeit (F2, F2') durch mindestens eine Abführungskammer (13, 13') zum Abführen der genannten geladenen Partikel; wobei die genannte Abführungskammer (13, 13') in ihrem Inneren einen dreidimensionalen elektrischen Leiter (18) mit einem im Wesentlichen plattenähnlichen Verlauf und einer Stärke (S) umfasst, wobei der dreidimensionale elektrische Leiter (18) porös ist oder mindestens ein dreidimensionales Netz aus leitfähigem Material umfasst, wobei der genannte dreidimensionale elektrische Leiter (18) in seinem Volumen entlang der genannten Stärke parallel zu dem genannten plattenähnlichen Verlauf von mindestens einer zweiten Aufbereitungsflüssigkeit (F2, F2') überquert wird; wobei die genannte mindestens eine Abführungskammer (13, 13') von der genannten mindestens einen Aufbereitungskammer (4, 5) durch mindestens eine Wand (16, 16', 17, 17') getrennt ist, die eine nicht-ionenselektive Filtermembran (100) umfasst;
- Erzeugung eines operativen elektrischen Felds zwischen zwei Elektroden (A, B), zwischen denen die genannte mindestens eine Aufbereitungskammer (4,5) und die genannte mindestens eine Abführungskammer (113, 13') eingefügt sind, durch Gleichspannung oder durchschnittliche Gleichspannung, die die genannten Elektroden (A, B) mit entgegengesetzten Polaritäten versorgt, um ein operatives elektrisches Feld in der genannten mindestens einen Aufbereitungskammer (4, 5) und ein begrenztes elektrisches Feld in der genannten mindestens einen Abführungskammer (13, 13') mit einem wegen der Abschirmwirkung des genannten dreidimensionalen elektrischen Leiters (18) geringeren Wert als der des genannten operativen elektrischen Felds zu erzeugen; wobei der genannte dreidimensionale elektrische Leiter (18) geeignet ist, im Inneren der genannten mindestens einen Abführungskammer (13, 13') das von den genannten Elektroden (A, B) erzeugte elektrische Feld zu verringern;
- Migration mindestens eines Teils der genannten geladenen Partikel unter der Einwirkung des genannten operativen elektrischen Feldes während des Strömens der genannten ersten Aufbereitungsflüssigkeit (F1) in die genannte mindestens eine Aufbereitungskammer (4, 5) in die Abführungskammer (13) durch Überqueren der genannten nicht-ionenselektiven Filtermembran (100);
- Abführung über die genannte Aufbereitungsflüssigkeit (F2, F2') der über die genannte nicht-ionenselektive Filtermembran (100) migrierten genannten geladenen Partikel in die Abführungskammer (13), die darin der Wirkung des begrenzten elektrischen Feldes ausgesetzt werden;
- Erzeugung des genannten elektrischen Feldes mit regelmäßiger Umkehrung der Polarität an den Elektroden (A, B) mit einer Polaritätsumkehrfrenquenz in einem Intervall zwischen 0,2 Hz und 10 kHz, um die mit entgegengesetzter Polarität geladenen Partikel dazu zu bringen, durch die genannte nicht-ionenselektive Filtermembran (100) zu migrieren und dabei von mindestens einer Aufbereitungskammer (4, 5) zu der genannten mindestens einen Abführungskammer (13, 13') zu fließen.

14. Verfahren nach Anspruch 13 mittels einer Vorrichtung nach Anspruch 1, **dadurch gekennzeichnet, dass** der Druck in der genannten mindestens einen ersten Abführungskammer (13, 13') im Verhältnis zu dem Druck in der genannten mindestens einen Aufbereitungskammer (4, 5) auf einen Wert eingestellt wird, der geeignet ist, das Austreten der Aufbereitungsströme (F1, F2) über die genannte nicht-ionenselektive Filtermembran (100) auf vorzugsweise 0 bis 20 % zu beschränken.

## Revendications

1. Appareil pour la purification d'un fluide, **caractérisé en ce qu'**il comprend :
- au moins une cellule d'absorption d'ions (2) traversée par au moins un premier fluide fonctionnel (F1) contenant des particules chargées, munie d'une structure de confinement (3) définissant à l'intérieur de celle-ci :
- au moins une chambre fonctionnelle (4, 5) équipée d'une ouverture d'entrée (6, 7) et d'une ouverture de sortie (8, 9), par lesquelles ledit au moins un premier fluide fonctionnel (F1) est susceptible de s'écouler ;
- au moins une chambre d'évacuation (13, 13') pour l'évacuation desdites particules chargées, par laquelle au moins un deuxième fluide fonctionnel (F2, F2') s'écoule ;
- ladite au moins une chambre fonctionnelle (4, 5) et ladite au moins une chambre d'évacuation (13, 13') étant séparées les unes des autres par au moins une membrane de filtration non ion-sélective (100) ;
- un conducteur électrique tridimensionnel (18) logé dans ladite au moins une chambre d'évacuation (13, 13'), ayant sensiblement une extension de type feuille d'épaisseur (S),
ledit conducteur électrique tridimensionnel (18) étant poreux ou comprenant au moins un filet tridimensionnel composé d'un matériau conducteur,
ledit conducteur électrique tridimensionnel (18) étant approprié pour être traversé dans son propre volume le long de ladite épaisseur parallèle à ladite extension de type feuille, par ledit au moins un deuxième fluide fonctionnel (F2, F2') ;
- une source d'alimentation électrique (12) ;
- une première et une deuxième électrode (A, B) séparées l'une de l'autre par ladite au moins une chambre fonctionnelle (4, 5) et ladite au moins une chambre d'évacuation (13, 13') interposées, et pouvant être alimentées par l'énergie de la source d'alimentation électrique (12) avec des polarités opposées afin de générer un champ électrique fonctionnel dans ladite au moins une chambre fonctionnelle (4, 5) et un champ électrique limité dans ladite au moins une chambre d'évacuation (13, 13'), ayant une valeur inférieure audit champ électrique fonctionnel, en raison de l'effet de blindage dudit conducteur électrique tridimensionnel (18) ;
- les particules chargées contenues dans ladite chambre fonctionnelle (4, 5) étant susceptibles de traverser ladite membrane de filtration non ion-sélective (100) sous l'action du champ électrique fonctionnel généré par lesdites première et deuxième électrodes (A, B), d'être évacuées par ledit au moins un deuxième fluide fonctionnel (F2, F2') dans ladite au moins une chambre d'évacuation (13, 13'), dans laquelle elles sont soumises à l'action dudit champ électrique limité ;
- ladite source d'alimentation électrique (12) inversant périodiquement les polarités desdites première et deuxième électrodes (A, B), avec une fréquence d'inversion de polarités comprise dans l'intervalle allant de 0,2 Hz à 10 Hz, afin de forcer lesdites particules cationiques et lesdites particules anioniques présentes dans ladite au moins une chambre fonctionnelle (4, 5) de pénétrer dans une desdites au moins une chambre d'évacuation (13, 13') par ladite au moins une membrane de filtration non ion-sélective (100).

2. Appareil pour la purification d'un fluide selon la revendication 1, **caractérisé en ce qu'**au moins une desdites chambres fonctionnelles (4, 5) est adjacente à l'une desdites première et deuxième électrodes (A, B) et est définie entre cette dernière et l'une desdites membranes de filtration non ion-sélective (100) desdites au moins une chambre d'évacuation (13, 13').

3. Appareil pour la purification d'un fluide selon la revendication 2, **caractérisé en ce qu'**il comprend au moins deux desdites chambres fonctionnelles (4, 5), chacune étant adjacente à l'une desdites première et deuxième électrodes (A, B) et étant définie entre cette dernière et l'une desdites membranes de filtration non ion-sélective (100) de ladite au moins une chambre d'évacuation (13, 13').

4. Appareil pour la purification d'un fluide selon la revendication 1, **caractérisé en ce qu'**il comprend au moins une première et une deuxième chambre fonctionnelle (4, 5), équipée respectivement de : une première et une deuxième ouverture d'entrée (6, 7) ; une première et une deuxième ouverture de sortie (8, 9), par lesquelles ledit au moins un premier fluide fonctionnel (F1) s'écoule ; et au moins une première et une deuxième paroi (10, 11) pour contenir ledit au moins un fluide fonctionnel (F1), étant respectivement associée à ladite première et à ladite deuxième électrode (A, B) ; ladite au moins une chambre d'évacuation (13, 13'), pour l'évacuation desdites particules cationiques et/ou particules anioniques, étant interposée entre lesdites première et deuxième chambres fonctionnelles (4, 5) et étant équipée d'une troisième (16, 16') et quatrième paroi (17, 17'), chacune comprenant ladite membrane de filtration non ion-sélective (100) ; lesdites troisième et quatrième paroi (16, 17) délimitant, avec ladite première paroi (10) et ladite deuxième paroi (11), respectivement ladite première chambre fonctionnelle (4) et dite deuxième chambre fonctionnelle (5).

5. Appareil pour la purification d'un fluide selon la revendication 1, **caractérisé en ce qu'**il comprend au moins une première et une deuxième chambre d'évacuation (13, 13'), chacune délimitée par une troisième paroi (16, 16') et une quatrième paroi (17, 17'), chacune équipée respectivement d'une troisième ouverture d'entrée (14, 14') et d'une troisième ouverture de sortie (15, 15'), par lesquelles ledit au moins un deuxième fluide fonctionnel (F2, F2') s'écoule ; au moins lesdites troisièmes parois (16, 16'), respectivement de ladite première et de ladite deuxième chambre d'évacuation (13, 13'), comprenant chacune une membrane de filtration non ion-sélective (100) et délimitant entre elles ladite au moins une chambre fonctionnelle (4), interposée entre ladite première et ladite deuxième chambre d'évacuation (13, 13') ;
- ladite première électrode et ladite deuxième électrode (A, B) étant associées aux quatrièmes parois (17, 17') respectivement de ladite première et ladite deuxième chambre d'évacuation (13, 13').

6. Appareil pour la purification d'un fluide selon l'une quelconque des revendications précédentes, **caractérisé en ce que** lesdites membranes de filtration (100) sont choisies parmi des membranes de microfiltration, des membranes d'ultrafiltration, des membranes de nanofiltration et des membranes d'osmose inverse.

7. Appareil pour la purification d'un fluide selon la revendication 1, **caractérisé en ce que** lesdites électrodes (A, B) sont protégées par une couche de couverture (38, 38'), en particulier obtenue d'une membrane de filtration non ion-sélective (100).

8. Appareil pour la purification d'un fluide selon la revendication 7, **caractérisé en ce que** chacune des couches de couverture (38, 38') est distante de ladite électrode (A, B) correspondante afin de définir entre elles, une chambre secondaire (39, 39') pour le passage d'au moins un fluide de lavage (F3, F3').

9. Appareil pour la purification d'un fluide selon la revendication 1, **caractérisé en ce qu'**il comprend une pluralité de chambres fonctionnelles (4, 5) et une pluralité de chambres d'évacuation (13, 13'), distribuées successivement les unes par rapport aux autres conformément à l'une ou plusieurs des revendications précédentes, des paires desdites première et deuxième électrodes (A, B) avec, interposées, ladite au moins une chambre fonctionnelle (4, 5) et ladite au moins une chambre d'évacuation (13, 13'), étant reliées électriquement en série.

10. Appareil pour la purification d'un fluide selon la revendication 9, **caractérisé en ce qu'**au moins deux électrodes intermédiaires (A, B) de ladite succession de paires d'électrodes (A, B) sont remplacées par au moins une membrane bipolaire (40).

11. Appareil pour la purification d'un fluide selon l'une quelconque des revendications précédentes, **caractérisé en ce que** ladite au moins une chambre fonctionnelle (4, 5) loge au moins un séparateur-espaceur (19) poreux isolant, susceptible d'être traversé par ledit premier fluide fonctionnel (F1), en particulier constitué d'un matériau granulaire de taille définie égale à la distance entre les parois de chaque chambre fonctionnelle.

12. Appareil pour la purification d'un fluide selon l'une quelconque des revendications précédentes, **caractérisé en ce qu'**il comprend au moins une résine échangeuse d'ions (36) présente à l'intérieur de ladite au moins une chambre fonctionnelle (4, 5) afin d'interférer avec le passage dudit premier fluide fonctionnel (F1), et maintenue à son intérieur à l'aide de moyens de rétention (37).

13. Procédé de purification d'un fluide au moyen de l'appareil selon la revendication 1, **caractérisé en ce qu'**il comprend :
- l'écoulement continu d'un premier fluide fonctionnel (F1) contenant des particules chargées au travers d'au moins une chambre fonctionnelle (4, 5) d'une ouverture d'entrée (6, 7) à une ouverture de sortie (8, 9) ;
- l'écoulement continu ou intermittent d'un deuxième fluide fonctionnel (F2, F2') au travers d'au moins une chambre d'évacuation (13, 13') pour l'évacuation desdites particules chargées ; ladite au moins une chambre d'évacuation (13, 13') comprenant à l'intérieur, un conducteur électrique tridimensionnel (18), ayant sensiblement une extension de type feuille d'épaisseur (S), ledit conducteur électrique tridimensionnel (18) étant poreux ou comprenant au moins un filet tridimensionnel composé d'un matériau conducteur, ledit conducteur électrique tridimensionnel (18) étant traversé dans son propre volume le long de ladite épaisseur parallèle à ladite extension de type feuille, par au moins un deuxième fluide fonctionnel (F2, F2') ; ladite au moins une chambre d'évacuation (13, 13') étant séparée de ladite au moins une chambre fonctionnelle (4, 5) par au moins une paroi (16, 16', 17, 17') comprenant une membrane de filtration non ion-sélective (100) ;
- la génération d'un champ électrique fonctionnel entre au moins deux électrodes (A, B), entre lesquelles ladite au moins une chambre fonctionnelle (4, 5) et ladite au moins une chambre d'évacuation (13, 13') sont interposées, par alimentation desdites électrodes (A, B) d'une tension directe ou d'une tension moyenne directe avec des polarités opposées, afin de générer un champ électrique fonctionnel dans ladite au moins une chambre fonctionnelle (4, 5) et un champ électrique limité dans ladite au moins une chambre d'évacuation (13, 13'), ayant une valeur plus faible que ledit champ électrique fonctionnel, en raison de l'effet de blindage dudit conducteur électrique tridimensionnel (18) ; ledit conducteur électrique tridimensionnel (18) étant susceptible de réduire, à l'intérieur de ladite au moins une chambre d'évacuation (13, 13'), le champ électrique généré par lesdites électrodes (A, B) ;
- la migration d'au moins une partie desdites particules chargées sous l'action dudit champ électrique fonctionnel pendant l'écoulement dudit premier fluide fonctionnel (F1) dans ladite au moins une chambre fonctionnelle (4, 5), vers la chambre d'évacuation (13), par traversée de ladite membrane de filtration non ion-sélective (100) ;
- l'évacuation par ledit deuxième fluide fonctionnel (F2, F2') desdites particules chargées ayant migré au travers de ladite membrane de filtration non ion-sélective (100) dans la chambre d'évacuation (13) et soumises à son intérieur à l'action du champ électrique limité ;
- la génération dudit champ électrique se produisant avec inversion périodique de la polarité aux électrodes (A, B) avec une fréquence d'inversion de polarité comprise dans un intervalle allant de 0,2 Hz à 10 Hz, afin d'obliger les particules chargées de polarité opposée à migrer au travers de ladite membrane de filtration non ion-sélective (100) en passant de ladite au moins une chambre fonctionnelle (4, 5) à ladite au moins une chambre d'évacuation (13, 13').

14. Procédé selon la revendication 13, utilisant un appareil selon la revendication 1, **caractérisé en ce que** la pression dans ladite au moins une chambre d'évacuation (13, 13') est ajustée par rapport à la pression dans ladite au moins une chambre fonctionnelle (4, 5) à une valeur susceptible de limiter la fuite des écoulements fonctionnels (F1, F2) par ladite membrane de filtration non ion-sélective (100), de préférence entre 0 et 20%.
